# FASCICULE DE BREVET EUROPEEN

(11) **EP 3 820 592 B1**
(45) Date de publication et mention de la délivrance du brevet: **04.12.2024**
(21) Numéro de dépôt: 19748589.9
(22) Date de dépôt: 10.07.2019
(51) Int. Cl.: B01D 47/06, A01N 25/00, A62D 3/00, B01D 53/00, B09B 3/00, G21F 9/00

(54) **PROCEDE DE DECONTAMINATION D'UN MILIEU GAZEUX CONTAMINE PAR DES ESPECES CONTAMINANTES EN SUSPENSION**
VERFAHREN ZUR DEKONTAMINATION EINES MIT KONTAMINIERENDEN SPEZIES IN EINER SUSPENSION KONTAMINIERTEN GASFÖRMIGEN MEDIUMS
METHOD FOR DECONTAMINATING A GASEOUS MEDIUM CONTAMINATED WITH CONTAMINATING SPECIES IN SUSPENSION

(30) Priorité: 11.07.2018 FR 1856386
(43) Date de publication de la demande: 19.05.2021
(73) Titulaire: Commissariat à l'Energie Atomique et aux Energies Alternatives, 75015 Paris (FR)
(72) Inventeur: GOSSARD, Alban, 84000 AVIGNON (FR); TURC, Hubert Alexandre, 30133 LES ANGLES (FR); VENDITTI, Pierre, 30130 SAINT-PAULET-DE-CAISSON (FR); GRANDJEAN, Agnès, 30330 SAINT-MARCEL-DE-CAREIRET (FR)
(74) Mandataire: Brevalex
(86) Numéro de dépôt international: PCT/FR2019/051735
(87) Numéro de publication internationale: WO 2020/012125

(56) Documents cités:
- EP-A1- 2 166 074
- EP-A2- 0 101 556
- WO-A1-2018/024990
- DE-C1- 4 244 099
- FR-A- 934 405
- FR-A1- 2 827 530
- FR-A1- 2 891 470
- GB-A- 2 328 783
- US-A- 6 102 992
- US-A1- 2016 057 993

## Description

### DOMAINE TECHNIQUE

L'invention a trait à un procédé de décontamination d'un milieu gazeux contaminé par des espèces contaminantes en suspension.

Le milieu gazeux peut être de l'air et alors le procédé selon l'invention est qualifié de procédé de décontamination atmosphérique.

Les espèces contaminantes ou contaminants en suspension peuvent se présenter notamment sous la forme de particules solides, de particules liquides, ou encore sous la forme d'espèces moléculaires.

Plus exactement, le procédé de décontamination selon l'invention permet la capture, le piégeage, le rabattement et la fixation de ces contaminants en suspension, sur une surface solide et éventuellement la décontamination de cette surface.

Les applications du procédé selon l'invention sont nombreuses et variées et concernent de nombreux domaines d'activité, industriels et domestiques.

### ÉTAT DE LA TECHNIQUE ANTÉRIEURE

L'élimination de contaminants, tels que des particules fines, des nanoparticules, des poussières ou des fibres, par exemple des fibres d'amiante, ou encore des molécules toxiques en suspension dans l'atmosphère et, plus généralement dans un milieu gazeux, est un problème qui se pose dans de nombreux domaines tels que les chantiers d'assainissement et de démantèlement d'installations nucléaires ou les chantiers de désamiantage, mais aussi dans l'épuration de l'air chargé de particules fines provenant d'appareils de chauffage notamment au bois. Ce problème peut également se poser dans le cas de situations post-accidentelles, notamment suite à un évènement dit NRBC (Nucléaire, Radiologique, Biologique, Chimique) ou à une catastrophe naturelle, et/ou sur des sites contaminés par des molécules chimiques toxiques ou des micro-organismes biologiques néfastes présents en suspension dans l'atmosphère.

L'élimination de ces contaminants en suspension met en oeuvre des traitements très complexes, et nécessite la mise en place de protocoles particuliers tels que le port d'équipements spécifiques (tenues d'intervention, protections respiratoires, etc.), ou la mise en place de sas de confinement et d'une ventilation spécifique.

En outre, les durées d'intervention des opérateurs sont réduites car ils doivent utiliser des tenues contraignantes.

Enfin, l'élimination de ces contaminants en suspension nécessite la plupart du temps l'arrêt des chantiers en cours.

Les risques associés à la présence de contaminants en suspension dans l'atmosphère sont principalement des risques pour la santé des travailleurs ou du public mais également des risques pour la sécurité et l'environnement.

L'élimination des contaminants en suspension impacte grandement les différents projets rencontrant ce problème, que ce soit en termes de coût, de sécurité, de sûreté, de délais, ou d'efficacité, etc.

Les procédés pour éliminer les contaminants tels que des (nano)particules, des poussières ou des fibres, par exemple des fibres d'amiante, ou encore des molécules toxiques en suspension dans l'atmosphère ou, plus généralement, dans un milieu gazeux, peuvent être classés en divers types, suivant la technique mise en oeuvre.

Un premier type de procédé est celui des procédés dans lesquels on réalise une filtration de l'air.

Ainsi, le document US-A1-2006/0248866 [1] a trait à un appareil de décontamination de l'air pour déplacer de l'air filtré dans un espace clos. Cet appareil comprend une enceinte comportant un compartiment de filtration de l'air avec une entrée et une sortie; au moins un premier filtre de décontamination de l'air disposé dans le compartiment de filtration de l'air entre l'entrée et la sortie, et un dispositif de déplacement de l'air (« *Air mover* ») en communication avec le compartiment de filtration de l'air pour déplacer l'air à travers le filtre de décontamination de l'air.

Selon le paragraphe [0013], l'appareil de décontamination de l'air peut comprendre un premier filtre de décontamination de l'air choisi dans le groupe constitué par un filtre HEPA, un filtre à charbon actif, un filtre à agent biologique, un filtre à agent chimique, et un filtre à agent radioactif.

Ce dispositif est un dispositif de filtration classique de l'air contaminé faisant appel à des filtres fixes opérant à sec et sans pulvérisation de liquide.

Il n'y a aucune mention ni aucune suggestion dans ce document de la pulvérisation d'un liquide, et encore moins d'un gel, *a fortiori* spécifiquement d'un gel inorganique, minéral aspirable, sous la forme spécifique de fines gouttelettes dans un milieu gazeux tel que de l'air, afin de capturer, rabattre, fixer les contaminants, polluants se trouvant dans ce milieu gazeux.

Les procédés de ce type, dans lesquels on réalise une filtration peuvent également être couplés à des procédés photocatalytiques en intégrant des lampes émettant des rayonnements UV.

Ainsi, le document WO-A3-2004/011041 [2] a trait, selon la revendication 1, à un dispositif de décontamination de l'air comprenant une enceinte définissant une entrée d'air, une sortie d'air, et un passage pour que l'air s'écoule depuis l'entrée vers la sortie; un filtre fixe disposé dans l'enceinte, le long du passage, ledit filtre comportant un côté amont pour recevoir l'air qui s'écoule le long du passage, et un côté aval pour la sortie de l'air depuis le filtre vers le passage; au moins une première lampe UV fixe disposée de manière à éclairer directement le côté amont du filtre; et un générateur d' ozone à proximité du filtre.

Ce dispositif est un dispositif de filtration classique de l'air contaminé faisant appel à un filtre fixe opérant à sec sans pulvérisation de liquide, il utilise également une lampe UV, et un générateur d'ozone.

Il n'y a aucune mention ni aucune suggestion dans ce document de la pulvérisation d'un liquide, et encore moins d'un gel, *a fortiori* spécifiquement d'un gel minéral aspirable sous la forme spécifique de fines gouttelettes dans un milieu gazeux tel que l'air, afin de capturer, rabattre, fixer les contaminants, polluants se trouvant dans ce milieu gazeux.

Cependant, les procédés de ce type, dans lesquels on réalise une filtration de l'air, nécessitent la mise en place de ventilations importantes pour pouvoir créer les flux d'air nécessaires à la filtration.

La présence d'une ventilation importante peut s'avérer, d'une part, difficile à mettre en place sur certains chantiers et, d'autre part, gênante car les circulations d'air ont tendance à remettre en suspension des contaminants qui ne l'étaient pas. Finalement, les filtres récupérant les contaminants constituent, après usage, des déchets non négligeables, en terme de volume notamment, et leur gestion peut s'avérer délicate , dans le cas d'une contamination radioactive par exemple.

Un second type de procédé est celui des procédés par voie humide [3, 4].

Le principe de ce type de procédé est de créer un brouillard ou une brume d'eau au sein de l'atmosphère contaminée. Les gouttelettes du brouillard ou de la brume captent ainsi les aérosols de contaminants en suspension et les rabattent au sol au cours de leur chute.

Ainsi, le document EP-A2-1935515 [3] décrit un système de décontamination d'une installation qui comporte (Fig. 1 de ce document [3]) au moins une buse (10) installée de manière permanente dans l'installation (12), un générateur d'aérosol liquide (14) situé à l'extérieur de l'installation, et des moyens (16) pour coupler le générateur d'aérosol liquide extérieur (14) à la buse (10). Le générateur d'aérosol liquide (14) comporte un réservoir contenant un agent de décontamination et des moyens propulseurs (« *propellant means* ») pour expulser l'agent de décontamination depuis le réservoir, via la buse (10) dans l'installation (12). L'agent de décontamination est de préférence pulvérisé dans l'installation (12) sous la forme d'un brouillard sec.

On laisse le brouillard sec d'agent de décontamination liquide agir pendant une durée suffisante pour qu'il atteigne ses buts, par exemple nettoyer les surfaces d'une pièce si un détergent est utilisé, réaliser une stérilisation efficace des surfaces intérieures de la pièce si un agent désinfectant est utilisé, et neutraliser le désinfectant si un agent de neutralisation est utilisé.

Il n'y a aucune mention ni aucune suggestion dans ce document que l'agent de décontamination liquide qui est pulvérisé soit sous la forme d'un gel, *a fortiori* spécifiquement d'un gel minéral aspirable.

L'agent de décontamination liquide ne contient pas, notamment, d'agent viscosant inorganique, si bien qu'il ne peut être sous la forme d'un gel.

En outre, dans ce document, le but recherché est plutôt de décontaminer les surfaces d'une pièce plutôt que de capturer, rabattre, fixer les contaminants, polluants se trouvant dans un milieu gazeux.

Le document WO-A1-2010/132949 [4] décrit, un procédé pour décontaminer une surface ou un espace contaminé par un contaminant choisi dans le groupe constitué par les agents de guerre chimique, les polluants industriels, les pesticides, les protéines bioactives, et les toxines. Ce procédé comprend une étape de mise de contact de la surface ou de l'espace contaminé(e) avec un aérosol comprenant un agent de décontamination puis, simultanément, ou à la suite, la mise en contact de la surface ou de l'espace contaminé avec un aérosol comprenant un antagoniste de l'agent de décontamination.

GB 2 328 783 divulgue un agent de décontamination liquide qui est pulvérisé sous la forme d'un gel, *a fortiori* spécifiquement d'un gel minéral aspirable.

C'est le second type de procédé qui est aujourd'hui le plus utilisé. De nombreux industriels commercialisent ainsi différents types de canons de pulvérisation de géométries diverses pour cette application. Cependant, ce type de procédé produit des effluents qui contiennent les contaminants collectés et qui peuvent s'avérer difficiles à traiter.

Des opérations de post-traitement pour la décontamination des effluents doivent alors nécessairement être mises en oeuvre. De plus, en cas de séchage de la phase aqueuse due à une évaporation naturelle ou forcée, les contaminants rabattus sur les parois peuvent être facilement remis en suspension dans l'air. Dans ces procédés, les contaminants sont certes captés mais leur confinement n'est pas optimisé.

Un problème particulièrement difficile à résoudre est celui de l'élimination des fibres d'amiante en suspension dans l'atmosphère sur les chantiers d'assainissement et de démantèlement d'installations nucléaires.

En effet, il est nécessaire sur les chantiers de désamiantage d'utiliser de l'eau, mise en oeuvre par brumisation, vaporisation, afin de capter les fibres d'amiante alors que, sur les chantiers « nucléaires », il est au contraire préférable d'éviter la présence d'eau pour limiter les risques de contamination et pour faciliter la gestion de la criticité.

Il existe donc, au regard de ce qui précède, un besoin pour un procédé de décontamination d'un milieu gazeux, tel que de l'air, contaminé par des espèces contaminantes en suspension qui ne présente pas les inconvénients, défauts, limitations et désavantages des procédés de décontamination de l'art antérieur, notamment des procédés de décontamination, décrits dans les documents de l'art antérieur cités plus haut. Il existe également un besoin pour un tel procédé qui permette de résoudre les problèmes des procédés de l'art antérieur.

Le but de la présente invention est de fournir un procédé de décontamination d'un milieu gazeux contaminé par des espèces contaminantes en suspension qui réponde entre autres aux besoins mentionnés plus haut.

### EXPOSÉ DE L'INVENTION

Ce but, et d'autres encore, sont atteints, conformément à l'invention, par un procédé de décontamination d'un volume d'un milieu gazeux contaminé par des espèces contaminantes en suspension, ledit volume d'un milieu gazeux étant en contact avec au moins une surface d'un substrat solide, ledit procédé comprenant les étapes successives suivantes :
a) on pulvérise dans ledit volume d'un milieu gazeux de fines gouttelettes, formant ainsi un brouillard, d'un gel inorganique constitué par une solution colloïdale comprenant un agent viscosant inorganique et un solvant ;
b) les espèces contaminantes en suspension sont capturées, captées par lesdites gouttelettes du gel inorganique ;
c) les gouttelettes du gel inorganique contenant les espèces contaminantes en suspension capturées se déposent sur ladite surface du substrat solide ;
d) on maintient le gel sur la surface du substrat solide au moins pendant une durée suffisante pour que le gel sèche et forme un résidu sec et solide contenant les espèces contaminantes en suspension capturées;
e) on récupère le résidu sec et solide contenant lesdites espèces contaminantes en suspension capturées.

Avantageusement, le milieu gazeux est de l'air. Il peut s'agir de l'air atmosphérique, ambiant.

Le volume d'un milieu gazeux est un volume clos défini par des parois, telles qu'un sol, un plafond et des murs, formant ladite surface, le brouillard de fines gouttelettes remplit la totalité du volume clos, et les fines gouttelettes du gel inorganique contenant les espèces contaminantes en suspension capturées, captées se déposent sur au moins l'une des parois, de préférence sur toutes les parois.

Généralement, les fines gouttelettes ont une taille, définie par leur plus grande dimension, telle qu'un diamètre, de 10 à 1000 µm, de préférence de 20 à 200 µm.

Généralement, le brouillard est un brouillard dense.

L'homme du métier comprendra facilement ce qu'est un brouillard qualifié de dense.

Le terme « gel » est parfaitement clair pour l'homme du métier et il a une signification largement acceptée.

Toutefois, généralement, on peut considérer qu'un gel peut posséder une viscosité supérieure ou égale à 0,1 Pa.s.

Le gel mis en oeuvre selon l'invention est qualifié de gel inorganique, minéral en ce sens qu'il comprend un agent viscosant inorganique, minéral.

Généralement, le gel ne contient en tant qu'agent viscosant, que cet agent viscosant inorganique, minéral, et il ne contient pas d'agent viscosant organique.

Le gel mis en oeuvre dans le procédé selon l'invention peut généralement être défini en ce qu'il est un gel dit « gel aspirable ».

Le terme « gel aspirable » est un terme couramment usité dans ce domaine de la technique, il a une signification largement acceptée que l'on rappelle plus bas.

Un gel aspirable est intrinsèquement différent d'un gel qui n'est pas aspirable.

Les gels aspirables sont historiquement utilisés spécifiquement pour la décontamination de surfaces.

Rappelons à cet égard que, dans le cadre de la décontamination nucléaire, des formulations gélifiées qui permettent de s'affranchir des problèmes liés au caractère pulvérulent du déchet sec, et d'accroître l'efficacité du procédé mettant en oeuvre un gel ont fait l'objet des documents [5] et [6].

Ces documents décrivent des gels colloïdaux inorganiques qui sont donc des gels dits « gels aspirables », à savoir des gels spécifiquement formulés pour être pulvérisés, puis pour sécher en se fracturant, tout en piégeant et confinant la contamination radioactive sous forme de paillettes aspirables et stockables.

Le document [5] décrit un gel constitué d'une solution colloïdale comprenant un agent viscosant inorganique, généralement de la silice ou de l'alumine, un agent actif de traitement qui est par exemple un acide ou une base inorganique telle que la soude ou la potasse, et éventuellement un agent oxydant ayant un potentiel normal d'oxydoréduction Eosupérieur à 1,4 V en milieu acide fort tel que Ce(IV), Co(III), ou Ag(II).

Le document [6] décrit un gel constitué d'une solution colloïdale comprenant un agent viscosant organique, généralement de la silice ou de l'alumine, un tensio-actif, un acide ou une base inorganique, éventuellement un agent oxydant ayant un potentiel normal d'oxydoréduction E₀ supérieur à 1,4 V en milieu acide fort tel que Ce(IV), Co(III), ou Ag(II).

Ces gels colloïdaux inorganiques aspirables, comprennent donc généralement un viscosant inorganique, minéral, tel que la silice ou l'alumine, un ou plusieurs agents actifs de décontamination, et éventuellement des tensioactifs et d'autres additifs organiques.

Du fait des différents constituants entrant dans leur composition, ces gels aspirables ont une rhéologie qui permet leur pulvérisation sur une surface contaminée, puis leur adhésion à cette surface, même verticale, sans couler.

Cela permet ainsi un contact prolongé entre le contaminant et l'agent actif de décontamination, sans que les propriétés mécaniques du substrat ne soient altérées.

Suite à sa pulvérisation, le gel sèche, se fracture, et produit des résidus secs, appelés « paillettes », adhérant au substrat et qui sont par la suite évacués par brossage ou aspiration pour être directement conditionnés.

Les procédés de décontamination qui mettent en oeuvre ces gels aspirables sont donc des procédés de décontamination de surface par voie sèche, ne générant aucun effluent liquide et peu de résidus solides secs. En effet, ces résidus solides secs ne représentent en moyenne qu'un quart de la masse de gel initialement pulvérisée. De plus, ces procédés limitent le temps d'exposition des opérateurs à la contamination radioactive, du fait de leur mise en oeuvre facile par pulvérisation puis aspiration des résidus secs, et du fait que la présence de l'opérateur n'est pas requise pendant le séchage du gel.

La mise en oeuvre de ces gels minéraux, inorganiques aspirables sous la forme de fines gouttelettes formant ce que l'on appelle un brouillard, brume de gel spécifiquement pour la décontamination d'un milieu gazeux contaminé par des espèces contaminantes en suspension, et non plus pour la décontamination de surfaces solides, n'a jamais été décrite ou suggérée dans l'art antérieur et notamment dans les documents [5] et [6] cités ci-dessus.

Le procédé selon l'invention comprend une succession spécifique d'étapes spécifiques qui n'a jamais été décrite ou suggérée dans l'art antérieur tel que représenté et notamment dans les documents cités ci-dessus.

Le procédé selon l'invention répond à l'ensemble des besoins et exigences mentionnés plus haut, il ne présente pas les inconvénients, défauts, limitations et désavantages des procédés de décontamination de milieux gazeux contaminés de l'art antérieur tels que ceux décrits dans les documents mentionnés plus haut.

En particulier, le procédé selon l'invention permet d'apporter une solution satisfaisante au problème de l'élimination des fibres d'amiante en suspension dans l'atmosphère sur les chantiers d'assainissement et de démantèlement d'installations nucléaires qui semblait jusqu'alors insurmontable car devant satisfaire à des exigences contradictoires.

Le procédé de la présente invention repose sur la constatation surprenante que les propriétés physico-chimiques des gels aspirables, qui n'étaient utilisés jusqu'à aujourd'hui que pour la décontamination de surfaces solides et non de milieux gazeux, les rendent aptes à être pulvérisés sous la forme très spécifique de fines gouttelettes.

Dans les procédés de décontamination de surfaces solides décrits plus haut, on pulvérise un jet homogène, cohérent de gel sur la surface solide.

Dans le procédé selon l'invention, on pulvérise de fines gouttelettes, distinctes séparées, qui forment un brouillard, et ces gouttelettes sont pulvérisées non pas sur une surface solide mais dans un volume d'un milieu gazeux.

Dans les procédés de décontamination de surface solides décrits plus haut, la projection du gel doit se faire non loin de la surface à traiter, par exemple à une distance de 30 cm à 1 m, avec un jet puissant, à pression élevée. Le temps de parcours, « temps de vol » du jet de gel entre la buse, embout de pulvérisation du dispositif de pulvérisation du gel, et la surface solide est court, par exemple de une à quelques millisecondes, par exemple 10 millisecondes. On ne cherche pas à accroître ce temps de vol.

Dans le procédé de décontamination d'un volume d'un milieu gazeux selon l'invention, on traite non pas une surface solide mais un volume donné d'un milieu gazeux.

Et donc, au contraire, dans le procédé selon l'invention, on cherche généralement à conférer aux fines gouttelettes générées, pulvérisées un temps de vol suffisamment important dans ledit volume d'un milieu gazeux, pour capter les contaminants en suspension.

Dans le procédé selon l'invention, le temps de parcours, « temps de vol » dans le volume de milieu gazeux, des gouttelettes de gel issues de la buse, embout de pulvérisation du dispositif de pulvérisation du gel, peut être considérée comme étant long par rapport au « temps de vol » du jet de gel dans les procédés de décontamination de surface.

Dans le procédé selon l'invention, le temps de vol du gel dans le volume de milieu gazeux peut être par exemple de 100 millisecondes jusqu'à une ou quelques secondes, par exemple, 2, 5, ou 9 secondes, voire jusqu'à une dizaine ou quelques dizaines de secondes, par exemple 10, 20, 30, 40, 50, 60 70, 80, 90, ou 100 secondes.

De préférence, le temps de vol du gel dans le volume de milieu gazeux peut être de 1 à 100 secondes, de préférence encore de 2 à 50 secondes, mieux de 3 à 40 secondes, mieux encore de 4 à 30 secondes, notamment de 5 à 20 secondes, notamment de 6 à 10 secondes.

Un exemple préféré d'un tel temps de vol est un temps de vol de 1 à 10 secondes, par exemple de 2, 3, 4 ou 5 secondes à 10 secondes.

Un tel temps de vol peut être obtenu en prenant une ou plusieurs des mesures suivantes :
- on peut placer la buse de pulvérisation du dispositif de pulvérisation loin (notamment à une distance de plusieurs mètres, par exemple de 2 à 5, 10, ou 20 mètres) de ladite au moins une surface d'un substrat solide, et plus généralement loin (notamment à une distance de plusieurs mètres, par exemple de 2 à 5, 10, ou 20 mètres) de toute surface solide sur laquelle les gouttelettes pulvérisées, formées seraient susceptibles d'adhérer.

L'idéal est de former le brouillard de gel à l'intérieur d'un volume de milieu gazeux important (notamment un volume de 1 m³ à plusieurs m³, par exemple un volume de 1 à 2, 5, 10, ou 20 m³).

Il est à noter que le remplissage du volume va dépendre de l'appareil de pulvérisation.

On peut régler les pressions de gel et de gaz, tel que de l'air, envoyé dans la buse du dispositif de pulvérisation pour former les gouttelettes de gel, en cherchant à diminuer la vitesse de projection, pulvérisation (relativement au volume de milieu gazeux dans lequel est réalisée la pulvérisation) afin de permettre aux gouttelettes de disposer d'un temps de vol suffisamment important dans le volume de milieu gazeux, tel que de l'air pour capter les contaminants.

Avantageusement, les pressions de gel et de gaz peuvent être chacune, indépendamment, de 1 à 10 bars, de préférence de 1 à 7 bars, de préférence encore de 1 à 5 bars, mieux de 1 à 3 bars. Par exemple, les pressions peuvent être de 5 à 10 bars.

Le dispositif de pulvérisation utilisé pour mettre en oeuvre le procédé selon l'invention et ses paramètres de fonctionnement sont adaptés pour obtenir le temps de vol prolongé mentionné ci-dessus.

Il a été constaté, selon l'invention, de manière surprenante, que grâce à leurs remarquables propriétés rhéofluidifiantes, les gels inorganiques, notamment aspirables, qui n'avaient été utilisés jusqu'à présent que pour la décontamination de surfaces solides, sont pulvérisables sous la forme très spécifique de gouttelettes fines.

Ces gouttelettes fines possèdent de manière surprenante, un temps de vol important leur permettant, d'une part, de rester en suspension dans le milieu gazeux, tel que l'atmosphère, pendant une durée plus importante que lors d'une pulvérisation (sous la forme d'un jet qui arrive très vite sur la surface) classiquement utilisée lors des opérations de décontamination de surface et, d'autre part, de pouvoir remplir la totalité du volume à décontaminer.

C'est donc grâce à ce temps de vol prolongé que les gouttelettes de gel peuvent entrer en contact avec les espèces contaminantes en suspension dans un milieu gazeux.

Le dispositif et le procédé de pulvérisation utilisés sont donc généralement adaptés pour former un brouillard ou une brume suffisamment dense de gouttelettes de gel afin que la totalité des espèces contaminantes présentes dans le volume de milieu gazeux à décontaminer soit captée, capturée par les gouttelettes de gel.

La pulvérisation selon l'invention d'un gel inorganique sous forme d'un brouillard ou d'une brume, notamment d'un brouillard ou d'une brume dense, possède ainsi de nombreux avantages significatifs pour la décontamination de milieux gazeux, notamment pour la décontamination atmosphérique, entre autres :
- les espèces contaminantes (telles que les particules, poussières, fibres d'amiante, molécules toxiques, etc.) présentes en suspension sont captées, capturées par les gouttelettes de gel.
- les gouttelettes contenant les espèces contaminantes se déposent sur la surface solide, par exemple sur les parois (telles que le sol, les murs, et le plafond) du volume à décontaminer et y adhèrent, fixant de cette manière les espèces contaminantes captées.

On peut noter qu'une étape de décontamination surfacique peut être éventuellement réalisée si une quantité suffisante de gel est pulvérisée. Les gouttelettes s'accumulent alors sur la surface du substrat solide telles que les parois (murs, sol, plafond) du volume à décontaminer jusqu'à y former une couche de gel, généralement d'une épaisseur millimétrique et effectuer une action de décontamination de surface.
- le gel sèche et produit un déchet solide non pulvérulent piégeant les espèces contaminantes et empêchant leur remise en suspension.
- la récupération du déchet contenant les espèces contaminantes (qui étaient en suspension, et éventuellement en surface et sous la surface du substrat solide) peut finalement s'effectuer facilement, par exemple par brossage ou aspiration, ne générant ainsi aucun effluent liquide à traiter *a posteriori.*

Les espèces contaminantes en suspension peuvent se présenter sous la forme de particules solides, de particules liquides, ou sous la forme d'espèces moléculaires.

Les espèces contaminantes peuvent être des espèces contaminantes chimiques, biologiques, nucléaires ou radioactives.

Les espèces contaminantes qui peuvent être éliminées par le procédé selon l'invention, peuvent être notamment des espèces contaminantes radioactives, et/ou chimiquement toxiques, et/ou toxiques du fait de leur forme et/ou de leur taille.

Les espèces contaminantes toxiques du fait de leur forme et/ou de leur taille, peuvent-être des espèces contaminantes se présentant sous la forme de particules solides telles que des microparticules, ou des nanoparticules, par exemple sous la forme de fibres telles que des microfibres ou des nanofibres, sous la forme de nanotubes, ou sous la forme de cristaux tels que des nanocristaux.

Ces fibres peuvent former une laine, telle qu'une laine de verre ou une laine dite laine de roche.

Les espèces contaminantes toxiques peuvent notamment se présenter sous la forme d'une poussière.

Il est à noter que certaines poussières de composés chimiquement non-toxiques, comme par exemple les poussières de céréales ou de bois, la farine, sont toxiques du seul fait qu'elles se présentent précisément sous cette forme de poussière.

Les espèces contaminantes peuvent être choisies parmi les métaux et métalloïdes sous forme de métal, de métalloïde, ou ionique, de préférence parmi les métaux dits « métaux lourds », et les métaux et métalloïdes toxiques sous forme de métal, de métalloïde, ou ionique ; les composés de ces métaux et métalloïdes tels que les composés organométalliques, les sels de métaux, les oxydes de métaux, les carbures de métaux, etc. ; les céramiques ; le bois ; les céréales ; la farine ; et les verres, par exemple sous la forme de laine de verre.

Au sens de l'invention, on entend par métaux dits « métaux lourds », tous les éléments traditionnellement désignés par cette dénomination ainsi que les éléments désignés par la dénomination d'éléments-traces métalliques, ou ETM.

Les métaux dits « métaux lourds », et les métaux et métalloïdes toxiques sont notamment l'antimoine, l'arsenic, le cadmium, le chrome, le cuivre, le plomb, le mercure, le nickel, le sélénium, le tellure, le thallium et l'étain.

Les espèces contaminantes peuvent être notamment de l'amiante, en particulier de l'amiante qui se trouve dans une atmosphère radioactive.

Les espèces contaminantes nucléaires, radioactives peuvent être tout composé chimique contenant un radionucléide, qu'il soit sous forme ionique, moléculaire ou particulaire.

Les espèces nucléaires, radioactives qui peuvent être éliminées, par le procédé selon l'invention peuvent être choisies par exemple parmi les oxydes et hydroxydes métalliques notamment sous la forme de précipités solides.

Avantageusement, la solution colloïdale comprend, en outre, un ou plusieurs composant(s) choisi(s) parmi les composants suivants :
- un agent tensioactif ;
- un agent actif de décontamination ;
- un agent piégeur (« *getter* ») pour piéger les espèces contaminantes gazeuses, notamment les espèces contaminantes gazeuses toxiques ou explosives, telles que l'hydrogène;
- un agent extractant des espèces contaminantes ;
- un agent fixateur des espèces contaminantes ;
- un agent colorant.

De préférence, la solution colloïdale, comprend, de préférence est constituée par :
- 1% à 30% en masse, de préférence 1% à 25% en masse, de préférence encore 5% à 25% en masse, mieux 8% à 20% en masse, par rapport à la masse du gel, d'au moins un agent viscosant inorganique ;
- éventuellement, 0,1% à 2% en masse par rapport à la masse du gel, d'au moins un agent tensio-actif;
- éventuellement 0,1 à 10 mol/L de gel, de préférence 0,5 à 10 mol/L de gel, de préférence encore 1 à 10 mol/L de gel, et mieux de 3 à 6 mol/L de gel, d'au moins un agent actif de décontamination ;
- éventuellement, 0,1% à 5% en masse, par rapport à la masse du gel, d'au moins un agent piégeur (« *getter* ») pour capter, piéger les espèces contaminantes gazeuses, notamment les espèces contaminantes gazeuses toxiques ou explosives, telles que l'hydrogène;
- éventuellement, 0,1% à 5% en masse, par rapport à la masse du gel, d'au moins un agent extractant des espèces contaminantes ;
- éventuellement, 0,1% à 5% en masse par rapport à la masse du gel d'au moins un agent fixateur des espèces contaminantes ;
- éventuellement 0,01% à 10% en masse, de préférence 0,1% à 5% en masse, par rapport à la masse du gel, d'au moins un agent colorant;
- et le reste de solvant.

La somme des pourcentages en masse de tous les composants, constituants du gel est bien évidemment de 100% en masse.

Par « reste de solvant », on entend que le solvant est toujours présent dans la solution colloïdale et que la quantité de solvant est une quantité telle que, lorsqu'elle est ajoutée aux quantités des composants de la solution colloïdale autres que le solvant (que ces composants soient des composants obligatoires ou éventuels cités plus haut, ou encore d'autres composants additionnels optionnels cités ou non cités), la quantité totale de tous les composants de la solution colloïdale est de 100% en masse.

Il est à noter qu'il n'est pas nécessaire que le gel contienne un ou plusieurs parmi les composants optionnels cités ci-dessus. En effet, un gel comprenant uniquement le solvant et l'agent viscosant permet de mettre en oeuvre avec succès le procédé selon l'invention en piégeant, capturant, captant les espèces contaminantes, et permet d'obtenir les effets et avantages énumérés plus haut.

Autrement dit, la solution colloïdale comprend, de préférence est constituée par :
- 1% à 30% en masse, de préférence 1% à 25% en masse, de préférence encore 5% à 25% en masse, mieux 8% à 20% en masse, par rapport à la masse du gel, d'au moins un agent viscosant inorganique ; et un ou plusieurs composant(s) choisi(s) parmi les composants suivants, dans les proportions suivantes :
- 0,1% à 2% en masse, par rapport à la masse du gel, d'au moins un agent tensio-actif ;
- 0,1 à 10 mol/L de gel, de préférence 0,5 à 10 mol/L de gel, de préférence encore 1 à 10 mol/L de gel, et mieux de 3 à 6 mol/L de gel, d'au moins un agent actif de décontamination ;
- 0,1% à 5% en masse, par rapport à la masse du gel, d'au moins un agent piégeur (« getter ») pour piéger les espèces contaminantes gazeuses, notamment les espèces contaminantes gazeuses toxiques ou explosives, telles que l'hydrogène ;
- 0,1% à 5% en masse, par rapport à la masse du gel, d'au moins un agent extractant des espèces contaminantes ;
- 0,1% à 5% en masse, par rapport à la masse du gel, d'au moins un agent fixateur des espèces contaminantes ;
- 0,01% à 10% en masse, de préférence 0,1% à 5% en masse, par rapport à la masse du gel, d'au moins un agent colorant;
- et le reste de solvant.

Autrement dit, ou bien, de préférence, la solution colloïdale comprend, de préférence est constituée par :
- 1% à 30% en masse, de préférence 1% à 25% en masse, de préférence encore 5% à 25% en masse, mieux 8% à 20% en masse, par rapport à la masse du gel, d'au moins un agent viscosant inorganique ;
- et le reste de solvant.

La présence d'un agent tensio-actif dans le gel mis en oeuvre dans le procédé selon l'invention influence favorablement et notablement les propriétés rhéologiques du gel. Ce tensio-actif favorise notamment la reprise de viscosité du gel suite à sa pulvérisation, nébulisation, atomisation sous la forme de fines gouttelettes et évite les risques d'épandage ou de coulure lorsque le gel se dépose sur des surfaces verticales et des plafonds .

La présence dans le gel d'au moins un agent actif de décontamination permet d'éliminer, détruire, inactiver, tuer, extraire les espèces contaminantes en suspension et éventuellement les espèces contaminantes en surface et sous la surface du substrat solide.

La présence dans le gel d'au moins un agent extractant des espèces contaminantes, permet de faciliter la capture et la fixation des espèces contaminantes présentes dans le milieu gazeux et éventuellement des espèces contaminantes en surface.

La présence dans le gel d'au moins un agent fixateur des espèces contaminantes, tel qu'une résine organique, permet d'éviter un relargage des espèces contaminantes dans le cas d'une éventuelle lixiviation du résidu sec et solide final.

La présence d'au moins un agent colorant dans le gel permet de mieux visualiser, repérer le résidu sec et solide final à la fin du procédé, quelle que soit la surface sur laquelle il est déposé, ce qui facilite la récupération de ce résidu.

Le gel mis en oeuvre selon l'invention est une solution colloïdale, ce qui signifie que le gel selon l'invention contient des particules solides inorganiques, minérales, d'agent viscosant dont les particules élémentaires, primaires, ont une taille généralement de 2 à 200 nm.

Du fait de la mise en oeuvre d'un agent viscosant généralement exclusivement inorganique, sans agent viscosant organique, la teneur en matières organiques du gel mis en oeuvre selon l'invention est généralement inférieure à 4% en masse, de préférence inférieure à 2% en masse, ce qui constitue un avantage des gels mis en oeuvre selon l'invention.

Ces particules solides, minérales, inorganiques jouent le rôle de viscosant pour permettre à la solution, par exemple la solution aqueuse, de se gélifier.

Avantageusement, l'agent viscosant inorganique peut être choisi parmi les oxydes de métaux tels que les alumines, les oxydes de métalloïdes tels que les silices, les hydroxydes de métaux, les hydroxydes de métalloïdes, les oxyhydroxydes de métaux, les oxyhydroxydes de métalloïdes, les aluminosilicates, les argiles telles que la smectite, et leurs mélanges.

En particulier, l'agent viscosant inorganique peut être choisi parmi les alumines (Al₂O₃) et les silices (SiO₂).

L'agent viscosant inorganique peut ne comprendre qu'une seule silice ou alumine ou un mélange de celles-ci, à savoir un mélange de deux silices différentes ou plus (mélange SiOz/SiOz), un mélange de deux alumines, différentes ou plus (mélange Al₂O_{3/}Al₂O₃), ou encore un mélange d'une ou plusieurs silices avec une ou plusieurs alumines (mélange SiO₂/Al₂O₃).

Avantageusement, l'agent viscosant inorganique peut être choisi parmi les silices pyrogénées, les silices précipitées, les silices hydrophiles, les silices hydrophobes, les silices acides, les silices basiques comme la silice Tixosil^{®} 73, commercialisée par la société Rhodia, et leurs mélanges.

Parmi les silices acides, on peut notamment citer les silices pyrogénées ou fumées de silice "Cab-O-Sil"^{®} M5, H5 ou EH5, commercialisées par la société CABOT^{®}, et les silices pyrogénées commercialisées par la société EVONIK INDUSTRIES^{®} sous l'appellation AEROSIL^{®}.

Parmi ces silices pyrogénées, on préférera encore la silice AEROSIL^{®} 380 d'une surface spécifique de 380 m²/g qui offre les propriétés viscosantes maximales pour une charge minérale minimale.

La silice utilisée peut aussi être une silice dite précipitée obtenue par exemple par voie humide par mélange d'une solution de silicate de soude et d'un acide. Les silices précipitées préférées sont commercialisées par la société EVONIK INDUSTRIES^{®} sous le nom de SIPERNAT^{®} 22 LS et FK 310 ou encore par la société RHODIA^{®} sous le nom de TIXOSIL^{®} 331, cette dernière est une silice précipitée dont la surface spécifique moyenne est comprise entre 170 et 200 m²/g.

Avantageusement, l'agent viscosant inorganique est constitué par un mélange d'une silice précipitée et d'une silice pyrogénée.

L'alumine peut être choisie parmi les alumines calcinées, les alumines calcinées broyées, et leurs mélanges.

De manière avantageuse, l'agent viscosant inorganique peut être constitué par une ou plusieurs alumine(s) représentant généralement de 5% à 30% en masse par rapport à la masse totale du gel.

Dans ce cas, la ou les alumine(s) est (sont) de préférence à une concentration de 8% à 17% en masse par rapport à la masse totale du gel pour assurer un séchage du gel à température comprise entre 20°C et 50°C et à une humidité relative comprise entre 20% et 60% en moyenne en 30 minutes à 5 heures.

Avantageusement, la ou les alumine(s) peut (peuvent) être choisie(s) parmi les alumines pyrogénées, de préférence parmi les alumines pyrogénées à granulométrie fine.

A titre d'exemple, on peut citer le produit vendu par la société EVONIK INDUSTRIES^{®} sous la désignation commerciale « Aeroxide Alumine C » qui est de l'alumine fine pyrogénée.

La nature de l'agent viscosant minéral, notamment lorsqu'il est constitué d'une ou plusieurs alumine(s), influence de manière inattendue le séchage du gel mis en oeuvre selon l'invention et la granulométrie du résidu obtenu.

En effet, le gel sec se présente sous la forme de particules de taille contrôlée, plus précisément de paillettes solides millimétriques, dont la taille va généralement de 1 à 10 mm, de préférence de 2 à 5 mm grâce notamment aux compositions précitées, en particulier lorsque l'agent viscosant est constitué par une ou plusieurs alumine(s).

Précisons que la taille des particules correspond généralement à leur plus grande dimension.

En d'autres termes, les particules solides minérales du gel mis en oeuvre selon l'invention, par exemple de type silice ou alumine, outre leur rôle de viscosant, jouent également un rôle fondamental lors du séchage du gel car elles assurent la fracturation du gel pour aboutir à un déchet sec sous forme de paillettes.

Le gel mis en oeuvre selon l'invention peut contenir un agent actif de décontamination.

Cet agent actif de décontamination peut être tout agent actif de décontamination permettant d'éliminer une espèce contaminante quelle que soit la nature de cette espèce contaminante : que cette espèce contaminante soit chimique, biologique ou encore nucléaire, radioactive -en d'autres termes, cet agent de décontamination peut être tout agent de décontamination « NRBC » (Nucléaire, Biologique, Radiologique, Chimique)-, ou que cette espèce contaminante soit organique ou minérale, liquide ou solide.

Le gel mis en oeuvre selon l'invention peut ainsi contenir un agent actif de décontamination biologique ou chimique ou encore nucléaire, radioactive.

L'agent actif de décontamination peut aussi être un agent de dégraissage, décapage afin d'éliminer une espèce contaminante éventuelle se trouvant sur la surface et éventuellement sous la surface dans la profondeur du substrat.

Certains agents actifs de décontamination peuvent jouer simultanément plusieurs fonctions de décontamination.

Par agent de décontamination biologique que l'on peut aussi qualifier d'agent biocide, on entend tout agent, qui lorsqu'il est mis en contact avec une espèce biologique et notamment une espèce biologique toxique est susceptible d'inactiver ou de détruire celle-ci.

Par espèce biologique, on entend tout type de micro-organisme tel que les bactéries, les champignons, les levures, les virus, les toxines, les spores notamment les spores de *Bacillus anthracis,* les prions, et les protozoaires.

Les espèces biologiques qui sont éliminées, détruites, inactivées, par le gel mis en oeuvre selon l'invention sont essentiellement des espèces biotoxiques telles que les spores pathogènes comme par exemple les spores de *Bacillus anthracis,* les toxines comme par exemple la toxine botulique ou la ricine, les bactéries comme les bactéries *Yersinia pestis* et les virus comme le virus de la vaccine ou les virus des fièvres hémorragiques par exemple de type Ebola.

Par agent de décontamination chimique, on entend tout agent qui lorsqu'il est mis en contact avec une espèce chimique et notamment une espèce chimique toxique est susceptible de détruire ou d'inactiver celle-ci.

Les espèces chimiques qui sont éliminées par le gel mis en oeuvre dans le procédé selon l'invention sont notamment les espèces chimiques toxiques telles que les gaz toxiques, en particulier neurotoxiques ou vésicants.

Ces gaz toxiques sont notamment des composés organophosphorés, parmi lesquels on peut citer le Sarin ou agent GB, le VX, le Tabun ou agent GA, le Soman, le Cyclosarin, le diisopropyl fluoro phosphonate (DFP), l'Amiton ou agent VG, le Parathion. D'autres gaz toxiques sont le gaz moutarde ou agent H ou agent HD, la Lewisite ou agent L, l'agent T.

L'agent actif de décontamination, par exemple l'agent actif de décontamination biologique ou chimique peut être choisi parmi les bases telles que l'hydroxyde de sodium, l'hydroxyde de potassium, et leurs mélanges ; les acides tels que l'acide nitrique, l'acide phosphorique, l'acide chlorhydrique, l'acide sulfurique, les hydrogénooxalates comme l'hydrogénooxalate de sodium, et leurs mélanges ; les agents oxydants tels que les peroxydes, les permanganates, les persulfates, l'ozone, les hypochlorites tels que l'hypochlorite de sodium, les sels de cérium IV, et leurs mélanges ; les sels d'ammonium quaternaires tels que les sels d'hexadécylpyridinium (cétylpyridinium), comme le chlorure d'hexadécylpyridinium (cétylpyridinium); les agents réducteurs; et leurs mélanges.

Par exemple, l'agent actif de décontamination peut être un agent désinfectant tel que l'eau de Javel, qui apporte au gel des propriétés de décontamination, dépollution biologique et/ou chimique.

Certains agents actifs de décontamination peuvent être classés parmi plusieurs des catégories définies plus haut.

Ainsi, l'acide nitrique est-il un acide, mais aussi un agent oxydant.

L'agent actif de décontamination, tel qu'un agent biocide, est généralement utilisé à une concentration de 0,1 à 10 mol/L de gel, de préférence de 0,5 à 10 mol/L de gel, de préférence encore de 1 à 10 mol/L, et mieux de 3 à 6 mol/L de gel afin de garantir un pouvoir de décontamination, par exemple un pouvoir d'inhibition des espèces biologiques, notamment biotoxiques, compatible avec le temps de séchage du gel, et pour assurer par exemple un séchage du gel à une température comprise entre 20°C et 50°C et à une humidité relative comprise entre 20% et 60 % en moyenne en 30 minutes à 5 heures.

De manière à atteindre l'efficacité totale, y compris dans les conditions de température et d'humidité les plus défavorables vis-à-vis du temps de séchage, la formulation du gel supporte différentes concentrations en agent actif. On peut remarquer, en effet, que l'augmentation de la concentration en agent de décontamination plus particulièrement en agent de décontamination acide ou basique accroît considérablement la durée de séchage du gel et donc l'efficacité du procédé.

L'agent actif de décontamination peut être un acide ou un mélange d'acides. Ces acides sont généralement choisis parmi les acides minéraux tels que l'acide chlorhydrique, l'acide nitrique, l'acide sulfurique et l'acide phosphorique.

Un agent décontaminant, notamment un agent décontaminant biologique particulièrement préféré est l'acide nitrique.

En effet, il s'est avéré de manière totalement surprenante que l'acide nitrique détruisait, inactivait, les espèces biologiques notamment biotoxiques.

En particulier, il a été mis en évidence de manière étonnante que l'acide nitrique assurait la destruction, l'inactivation, des spores telles que les spores de *Bacillus thuringiensis* qui sont des espèces particulièrement résistantes.

L'acide ou les acides est (sont) de préférence présent(s) à une concentration de 0,5 à 10 mol/L, de préférence encore de 1 à 10 mol/L, mieux de 3 à 6 mol/L pour assurer un séchage du gel généralement à une température comprise entre 20°C et 50°C et à une humidité relative comprise entre 20% et 60% en moyenne en 30 minutes à 5 heures.

Pour ce type de gel acide, l'agent viscosant inorganique est de préférence la silice ou un mélange de silices.

Ou bien, l'agent actif de décontamination par exemple l'agent actif de décontamination biologique peut être une base, de préférence une base minérale, choisie de préférence parmi la soude, la potasse, et leurs mélanges.

Dans le cas d'une telle formulation de gel basique, le gel selon l'invention a, outre l'action de décontamination, une action de dégraissage ce qui permet d'éliminer aussi les espèces contaminantes éventuelles en surface du substrat.

Comme on l'a déjà mentionné plus haut, de manière à atteindre une efficacité totale, y compris dans les conditions climatiques les plus défavorables vis-à-vis du temps de séchage du gel, le gel selon l'invention peut présenter une large gamme de concentration en agent(s) de décontamination basique(s).

En effet, l'augmentation de la concentration en agent de décontamination basique comme NaOH ou KOH, jouant généralement le rôle d'agent biocide, permet d'accroître considérablement les vitesses d'inhibition des espèces biologiques, comme cela a été démontré pour des spores de *Bacillus thuringiensis.*

La base est avantageusement présente à une concentration inférieure à 10 mol/L, de préférence entre 0,5 et 7 mol/L, de préférence encore entre 1 et 5 mol/L, mieux entre 3 et 6 mol/L, pour assurer un séchage du gel à une température comprise entre 20°C et 50°C et à une humidité relative comprise entre 20% et 60% en moyenne en 30 minutes à 5 heures.

Pour ce type de gel alcalin, basique, l'agent viscosant inorganique est de préférence une alumine ou un mélange d'alumines.

L'agent de décontamination en particulier lorsqu'il s'agit d'un agent de décontamination biologique est de préférence l'hydroxyde de sodium ou l'hydroxyde de potassium.

Au regard par exemple de la cinétique d'inhibition des spores et des durées de séchage des gels en fonction de la température, l'agent actif de décontamination, notamment lorsqu'il s'agit d'un agent biocide sera de préférence l'hydroxyde de sodium à une concentration comprise entre 1 et 5 mol/L.

Le gel peut éventuellement aussi contenir un agent tensio-actif ou un mélange d'agents tensio-actifs, de préférence choisis parmi la famille des agents tensio-actifs non ioniques tels que les copolymères blocs, séquencés comme les copolymères séquencés d'oxyde d'éthylène et d'oxyde de propylène, et les acides gras éthoxylés ; et leurs mélanges.

Pour ce type de gel, les agents tensio-actifs sont de préférence des copolymères blocs commercialisés par la société BASF^{®} sous la dénomination PLURONIC^{®}.

Les Pluronics^{®} sont des copolymères séquencés d'oxyde d'éthylène et d'oxyde de propylène.

Ces agents tensio-actifs influencent les propriétés rhéologiques du gel, notamment le caractère thixotropique du produit et son temps de reprise et évitent l'apparition de coulure.

Les agents tensio-actifs permettent, par ailleurs, de maîtriser l'adhésion du déchet sec, et de contrôler la taille des paillettes de résidu sec pour garantir la non-pulvérulence du déchet.

Avantageusement, l'agent piégeur (« *getter* ») est choisi parmi les solides de très grande surface spécifique qui contiennent des sites de surfaces actifs, tels que les carbones poreux, par exemple les charbons actifs; les particules de matériaux cages, telles que les particules de zéolithes et de MOFs ; et les particules d'oxydes minéraux pouvant réagir avec les espèces contaminantes à piéger et plus spécifiquement avec l'hydrogène, tels que les oxydes de manganèse (MnO₃, Mn₂O₃, Mn₂O₄) et les oxydes de métaux nobles, par exemple Ag₂O ou RuO₂.

Avantageusement, l'agent fixateur des espèces contaminantes est choisi parmi les résines organiques, telles que les résines polyuréthanes, les résines époxy, les résines acryliques etc.

Avantageusement, l'agent extractant des espèces contaminantes est choisi parmi les adsorbants inorganiques comme les zéolithes, les argiles, les phosphates comme les apatites, les titanates comme les titanates de sodium, et les ferrocyanures et ferricyanures.

Cet agent extractant éventuel tel qu'une zéolithe ou une argile peut être utilisé dans le cas où l'espèce contaminante est un radionucléide, mais cet agent extractant éventuel peut aussi être utilisé dans le cas d'espèces contaminantes autres que les radionucléides, comme par exemple des métaux, tels que des métaux toxiques ou métaux lourds.

Avantageusement, l'agent colorant est choisi parmi les colorants, de préférence les colorants organiques, et les pigments, de préférence les colorants minéraux.

Avantageusement, le pigment est un pigment minéral. On pourra à cet égard se reporter au document WO-A1-2014/154817 [7].

Il n'existe aucune limitation quant au pigment minéral qui est incorporé dans le gel mis en oeuvre selon l'invention.

Généralement, le pigment minéral est choisi parmi les pigments minéraux qui sont stables dans le gel.

Par pigment stable, on entend généralement que le pigment ne présente pas de changement stable de sa couleur dans le temps, lors du stockage du gel pendant une durée minimale de 6 mois.

Il n'y a aucune limitation quant à la couleur de ce pigment, qui est généralement la couleur qu'il va communiquer au gel. Ce pigment peut être de couleur noire, rouge, bleue, verte, jaune, orange, violette, marron, etc., et même blanche.

Généralement, le gel a donc une couleur identique à la couleur du pigment qu'il contient. Il est toutefois possible que le gel possède une couleur qui diffère de la couleur du pigment qu'il contient mais cela n'est pas recherché.

Le pigment, notamment lorsqu'il est blanc, est généralement différent de l'agent viscosant inorganique.

Avantageusement, le pigment minéral est choisi de telle sorte qu'il donne au gel après séchage une couleur différente de la couleur de la surface sur laquelle le gel est déposé.

Avantageusement, le pigment minéral est un pigment micronisé, et la taille moyenne des particules du pigment minéral peut être de 0,05 à 5 µm, de préférence de 0,1 à 1 µm.

Le fait que le pigment soit micronisé permet d'éviter qu'il modifie la rhéologie et l'aptitude à la pulvérisation du gel (« pulvérisabilité ») car le pigment a alors la même taille micrométrique qui est généralement celle de l'agent viscosant inorganique, tel que les agrégats d'alumine.

Avantageusement, le pigment minéral est choisi parmi les oxydes de métal (métaux) et/ou de métalloïde(s), les hydroxydes de métal (métaux) et/ou de métalloïde(s), les oxyhydroxydes de métal (métaux) et/ou de métalloïde(s), les ferrocyanures et ferricyanures de métal (métaux), les aluminates de métal (métaux), et leurs mélanges.

De préférence, le pigment minéral est choisi parmi les oxydes de fer, de préférence micronisés, et leurs mélanges.

Les oxydes de fer peuvent avoir différentes couleurs, ils peuvent être par exemple jaunes, rouges, violets, oranges, marrons, ou noirs.

En effet, les pigments d'oxyde de fer sont reconnus pour avoir un bon pouvoir couvrant et une grande résistance aux acides et aux bases.

Pour une incorporation dans un gel de décontamination, les oxydes de fer présentent les meilleures performances en termes de stabilité et de pouvoir colorant. Ainsi, une teneur en oxyde de fer de 0,1%, voire 0,01% en masse suffit à fortement colorer le gel sans en modifier les propriétés.

Comme on l'a déjà indiqué plus haut, le fait que le pigment d'oxyde de fer soit de préférence micronisé permet d'éviter qu'il ne modifie la rhéologie et l'aptitude à la pulvérisation du gel (« pulvérisabilité ») car le pigment a alors une taille micrométrique, à savoir une taille qui est généralement celle de l'agent viscosant inorganique, tel que les agrégats d'alumine.

Des oxydes de fers micronisés sont disponibles auprès de la société Rockwood^{®} sous la dénomination commerciale Ferroxide^{®}.

On peut citer entre autres le Ferroxide^{®} 212 M qui est un oxyde de fer rouge micronisé avec une taille moyenne des particules de 0,1 µm et le Ferroxide^{®} 228 M qui est un oxyde de fer rouge micronisé avec une taille moyenne des particules de 0,5 µm.

En plus et/ou à la place des oxydes de fer, d'autres oxydes ou hydroxydes de métaux ou de métalloïdes colorés peuvent être incorporés dans le gel selon l'invention, en fonction du pH du gel, on peut notamment citer l'oxyde de vanadium (V₂O₅) qui est orange, l'oxyde de manganèse (MnO₂) qui est noir, l'oxyde de cobalt qui est bleu ou vert, et les oxydes de terres rares. Cependant, les oxydes de fer sont préférés pour les raisons précisées plus haut.

Parmi les oxyhydroxydes, on peut citer la goethite, c'est-à-dire l'oxyhydroxyde de fer FeOOH, qui est très colorée.

A titre d'exemple de ferrocyanure de métal, on peut citer, le bleu de Prusse, c'est-à-dire le ferrocyanure ferrique, et à titre d'exemple d'aluminate, on peut citer le bleu de cobalt, c'est-à-dire l'aluminate de cobalt.

Le solvant du gel mis en oeuvre selon l'invention est généralement choisi parmi l'eau, les solvants organiques, et leurs mélanges.

Un solvant préféré est l'eau, et dans ce cas, le solvant est donc constitué par de l'eau, comprend 100% d'eau.

Dans le cas où la surface du substrat solide, par exemple les parois du volume clos, est contaminée par au moins une espèce contaminante dite espèce contaminante surfacique se trouvant sur ladite surface et éventuellement sous ladite surface dans la profondeur du substrat, le gel contient alors un agent de décontamination tel que décrit plus haut, et lors de l'étape d) on maintient le gel sur la surface au moins pendant une durée suffisante pour que le gel détruise et/ou inactive et/ou absorbe l'espèce contaminante surfacique, et pour que le gel sèche et forme un résidu sec et solide contenant ladite espèce contaminante surfacique et les espèces contaminantes en suspension captées par le gel.

Dans ce mode de réalisation, le procédé selon l'invention permet, dans un premier temps, de réaliser la décontamination d'un milieu gazeux, par exemple une décontamination atmosphérique puis, dans un second temps, de réaliser une décontamination surfacique du substrat solide.

L'espèce contaminée surfacique peut être sous une forme massive ou particulaire, contenue dans une couche de surface du matériau du substrat, sous la forme d'un film ou contenue dans un film, par exemple un film de graisses à la surface du substrat, sous la forme d'une couche ou contenue dans une couche, par exemple une couche de peinture à la surface du substrat, ou tout simplement déposée sur la surface du substrat.

Selon la nature de la contamination, les modes d'action des gels diffèrent : érosion du matériau support contenant la contamination, solubilisation de la pellicule contaminante, par exemple de graisses, ou de recouvrement par exemple de peinture, ou encore inactivation *in situ* des contaminants chimiques ou biologiques dans le cas d'espèces pathogènes (anthrax).

Comme on l'a déjà mentionné plus haut, dans le cas d'une formulation de gel basique (l'agent de décontamination est une base), le gel selon l'invention a, outre l'action de décontamination, une action de dégraissage.

Lorsque l'agent de décontamination est un acide ou une base, le gel peut réaliser une décontamination de la surface du substrat en corrodant sur quelques microns cette surface sur laquelle il est déposé.

Il est à noter que dans le cas des espèces radioactives, on ne parle pas de destruction ou d'inactivation mais seulement d'élimination de la contamination par dissolution des dépôts irradiants ou corrosion des matériaux supports de la contamination. Il y a donc véritablement transfert de la contamination nucléaire vers les paillettes de gel sec.

Il est à noter que, dans le cas d'une surface non poreuse, la contamination, par exemple la contamination biologique, « inactivée », est récupérée par les paillettes de gel sec.

Par contre, dans le cas d'une contamination profonde, comme c'est le cas dans les matériaux poreux tels que les matrices cimentaires, le gel sec ne contiendra que le résidu de contamination surfacique.

Toutefois, l'efficacité du procédé selon l'invention est tout aussi bonne en présence d'une surface non poreuse et/ou non minérale.

Avantageusement, le substrat solide est en au moins un matériau solide choisi parmi les métaux et les alliages métalliques comme l'acier inoxydable, les aciers peints, l'aluminium, et le plomb ; les polymères tels que les matières plastiques ou les caoutchoucs comme les poly(chlorure de vinyle)s ou PVC, les polypropylènes ou PP, les polyéthylènes ou PE notamment les polyéthylènes haute densité ou HDPE, les poly(méthacrylate de méthyle)s ou PMMA, les poly(fluorure de vinylidène)s ou PVDF, les polycarbonates ou PC ; les verres ; les ciments et les matériaux cimentaires ; les mortiers et bétons ; les plâtres ; les briques ; la pierre naturelle ou artificielle ; les céramiques.

L'espèce contaminante surfacique peut être choisie parmi les espèces contaminantes chimiques, biologiques, nucléaires ou radioactives déjà énumérées plus haut pour ce qui concerne les espèces contaminantes en suspension, et notamment parmi les espèces biologiques toxiques déjà énumérées plus haut.

Avantageusement, on fait alors en sorte que la quantité de gel déposée sur la surface à décontaminer soit suffisante pour réaliser ladite décontamination en surface et éventuellement sous la surface du substrat.

Avantageusement, la quantité de gel déposée peut être de 100 g à 2000 g de gel par m² de surface, de préférence de 500 à 1500 g de gel par m² de surface, de préférence encore de 600 à 1000 g de gel par m² de surface, ce qui correspond généralement à une épaisseur de gel déposée sur la surface comprise entre 0,5 mm et 2 mm.

Avantageusement, lors de l'étape d), le séchage est réalisé à une température de 1°C à 50°C, de préférence de 15°C à 25°C, et sous une humidité relative de 20% à 80%, de préférence de 20% à 70%.

Avantageusement, le gel est maintenu sur la surface pendant une durée de 2 à 72 heures, de préférence de 2 à 48 heures, de préférence encore de 3 à 24 heures.

Avantageusement, le résidu sec et solide se présente sous la forme de particules, par exemple de paillettes, d'une taille de 1 à 10 mm, de préférence de 2 à 5 mm.

Avantageusement, le résidu sec et solide est éliminé de la surface solide par brossage et/ou aspiration.

Lorsque l'on réalise une décontamination surfacique, le procédé selon l'invention possède toutes les propriétés avantageuses connues inhérentes au gel de décontamination qu'il met en oeuvre, par exemple :
- l'adhérence aux parois,
- l'obtention de l'efficacité maximale de décontamination à l'issue de la phase de séchage du gel,

En général, on fait en sorte que le temps de séchage soit supérieur ou égal à la durée nécessaire pour l'inactivation.
- le traitement d'une gamme très large de matériaux,
- l'absence d'altération mécanique ou physique des matériaux à l'issue du traitement,
- la mise en oeuvre du procédé dans des conditions climatiques variables,
- la réduction du volume de déchet,
- la facilité de récupération du déchet sec.

D'autres caractéristiques et avantages de l'invention apparaîtront mieux à la lecture de la description détaillée qui suit, cette description étant faite à titre illustratif et non limitatif, en liaison avec les dessins joints.

### BRÈVE DESCRIPTION DES DESSINS

- La Figure 1 est une vue schématique en coupe verticale d'un dispositif, mis en oeuvre dans le procédé selon l'invention, pour pulvériser de fines gouttelettes d'un gel.
- La Figure 2 est un graphique qui montre l'évolution de la viscosité (en Pa.s) en fonction du taux de cisaillement (1/s), pour le gel dit « *Gel-1* » préparé dans l'exemple 1 (voir exemple 2).
- La Figure 3 est un graphique qui montre l'évolution de la viscosité (en Pa.s) en fonction du temps (en sec.) pour le gel dit « *Gel-1* » préparé dans l'exemple 1 (voir exemple 2).
- La Figure 4 est un graphique qui montre l'évolution de la contrainte de cisaillement (en Pa) en fonction de la déformation (en Pa) pour le gel dit « *Gel-1* » préparé dans l'exemple 1 (voir exemple 2).
- La Figure 5 est une photographie prise au Microscope électronique à balayage (MEB) des gouttelettes de gel séchées obtenues après pulvérisation et séchage du gel dit *« Gel-1* » préparé dans l'exemple 1. Les gouttelettes pulvérisées issues de la buse sont récupérées sur un patch de carbone adhésif déposé dans un coin du volume dans lequel a été pulvérisé le brouillard (voir exemple 3).
- La Figure 6 est une photographie montrant le remplissage d'un volume clos de 4,5 m³ avec un brouillard du gel dit « Gel-1 » préparé dans l'exemple 1 (voir exemple 4).

### EXPOSÉ DÉTAILLÉ DE MODES DE RÉALISATION PARTICULIERS

Le gel mis en oeuvre dans le procédé selon l'invention peut être facilement préparé à la température ambiante.

Par exemple, le gel selon l'invention peut être préparé en ajoutant de préférence progressivement, le ou les agent(s) viscosant(s) inorganique(s), par exemple la ou les alumine(s) et/ou la ou les silice(s), au solvant tel que de l'eau, de préférence de l'eau déionisée, ou à un mélange du solvant et d'un ou plusieurs composants choisi(s) parmi les composants déjà énumérés plus haut, à savoir : un agent tensioactif; un agent actif de décontamination; un agent piégeur (« *getter* »); un agent fixateur des contaminants; un agent colorant.

Ce mélange peut être réalisé par agitation mécanique, par exemple au moyen d'un agitateur mécanique équipé d'une hélice à trois pales. La vitesse de rotation est par exemple de 200 tours/minute, et la durée de l'agitation est par exemple de 3 à 5 minutes.

L'addition du ou des agent(s) viscosant(s) inorganique(s) au solvant ou au mélange du solvant et du ou des composant(s) cité(s) plus haut peut être réalisée en versant simplement le ou les agent(s) viscosant(s) dans ledit mélange. Lors de l'addition du ou des agent(s) viscosant(s) inorganique(s), le mélange contenant le solvant, ce ou ces agent(s) viscosant(s) inorganique(s), et éventuellement le ou composant(s) cité(s) plus haut est généralement maintenu sous agitation mécanique.

Cette agitation peut être, par exemple, réalisée au moyen d'un agitateur mécanique équipé d'une hélice à trois pales.

La vitesse d'agitation est généralement augmentée graduellement au fur et à mesure que la viscosité de la solution augmente, pour atteindre finalement une vitesse d'agitation comprise par exemple entre 400 et 600 tours/minute lorsque la totalité du ou des agent(s) viscosant(s) inorganique(s) a été ajoutée, sans qu'il n'y ait eu de projections.

Après la fin de l'ajout du ou des viscosant(s) inorganique(s) (minéral (aux)), l'agitation est encore maintenue, par exemple pendant 2 à 5 minutes, de manière à obtenir un gel parfaitement homogène.

On laisse ensuite le gel ainsi préparé au repos pendant au moins une heure avant de l'utiliser.

Il est bien évident que d'autres protocoles de préparation des gels mis en oeuvre dans le procédé selon l'invention peuvent être mis en oeuvre avec une addition des composants du gel dans un ordre différent de celui mentionné plus haut.

Généralement, le gel selon l'invention doit présenter une viscosité inférieure à 200 mPa.s sous un cisaillement de 1000s⁻¹ afin qu'il puisse être pulvérisé, nébulisé, atomisé, sous la forme de fines gouttelettes telles que définies plus haut.

Le temps de reprise de la viscosité doit généralement être inférieur ou égal à une seconde et la viscosité sous faible cisaillement supérieure à 10 Pa.s pour ne pas couler sur une paroi.

Le gel préparé comme décrit ci-dessus est ensuite pulvérisé, nébulisé dans un milieu gazeux sous la forme de fines gouttelettes.

Ces fines gouttelettes forment un brouillard ou une brume qui remplit généralement la totalité du volume de milieu gazeux à décontaminer.

Ainsi dans le cas où le milieu gazeux se trouve dans un volume clos défini par des parois, telles qu'un sol, un plafond et des murs, le brouillard de gouttelettes remplit la totalité du volume clos.

Ce brouillard ou cette brume est généralement suffisamment dense pour que la totalité des espèces contaminantes en suspension dans le volume de milieu gazeux soit captée, capturée par les gouttelettes de gel.

La pulvérisation du gel peut être réalisée par tout dispositif permettant de pulvériser le gel sous la forme de fines gouttelettes formant une brume ou brouillard, de préférence une brume ou brouillard ayant une densité suffisante pour capter toutes les totalités des espèces contaminantes en suspension dans le volume de milieu gazeux à décontaminer.

En outre, comme on l'a déjà expliqué plus haut, le dispositif de pulvérisation utilisé pour mettre en oeuvre le procédé selon l'invention, et ses paramètres de fonctionnement, sont adaptés pour obtenir le temps de vol prolongé mentionné ci-dessus.

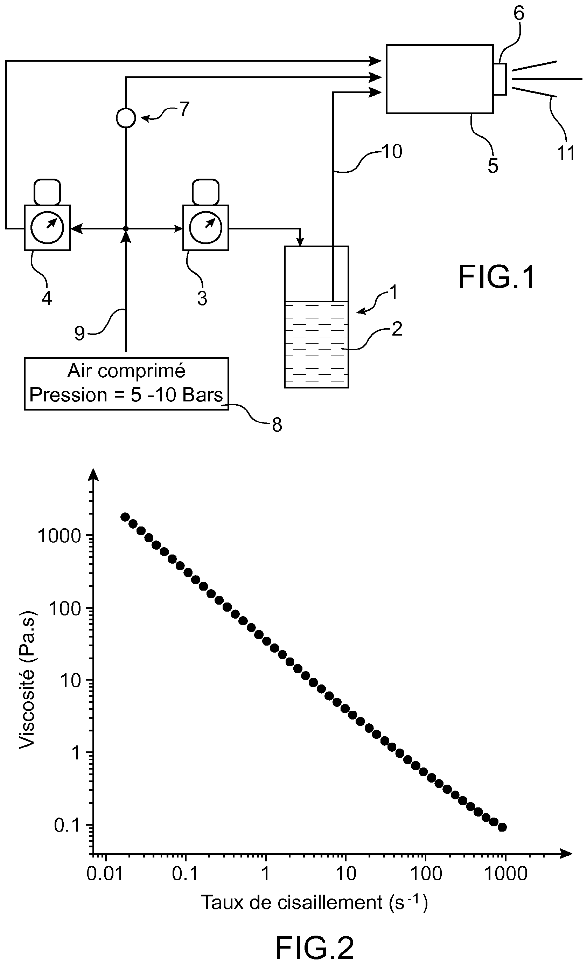

La Figure 1 représente un exemple d'un tel dispositif de pulvérisation.

Ce dispositif comprend un réservoir ou carter (1) qui contient le gel (2), un détendeur de fluide (3) permettant de régler la pression de fluide P_{fluide} (c'est à dire la pression appliquée dans le réservoir ou carter (1)) et un détendeur d'air (4) permettant de régler la pression d'air Pₐᵢᵣ, un pistolet de pulvérisation (5) muni d'une buse de pulvérisation (6), et un actionneur (7) . Ce dispositif fonctionne uniquement avec de l'air comprimé (par exemple sous une pression de 5 à 10 bars) (8), acheminé par une canalisation (9), aucune alimentation électrique ou autre source d'énergie n'est nécessaire. Le carter ou réservoir (1) est tout d'abord rempli de gel (2). Le carter ou réservoir (1) est ensuite pressurisé (1 à 7 bars) à l'aide du détendeur de fluide (3) afin de permettre au gel d'arriver au pistolet (5) et à la buse de pulvérisation (6) par l'intermédiaire de la canalisation (10).

Un brouillard de gel (11) est créé en appliquant au niveau de la buse de pulvérisation (6) une pression de fluide, par exemple une pression de 1 à 10 bars, de préférence de 1 à 7 bars, de préférence encore de 1 à 5 bars, mieux de 1 à 3 bars, et une pression d'air, par exemple une pression de 1 à 10 bars, de préférence de 1 à 7 bars, de préférence encore de 1 à 5 bars, mieux de 1 à 3 bars.

Les gouttelettes de gel formant un brouillard, brume, ou nébulisât sont pulvérisées dans un volume d'un milieu gazeux qui contient des espèces contaminantes en suspension.

On peut dire que les espèces contaminantes peuvent se présenter sous la forme d'un aérosol solide ou liquide c'est-à-dire sous la forme d'un ensemble de fines particules, solides ou liquides, en suspension dans le milieu gazeux.

Autrement dit, les espèces contaminantes peuvent être sous la forme d'une suspension particulaire (de nanoparticules, poussières, fibres par exemple fibres d'amiante) au sein d'un milieu gazeux.

Les espèces contaminantes peuvent également se présenter sous la forme d'une suspension d'espèces moléculaires, par exemple chimiques ou biologiques au sein d'un milieu gazeux.

Le volume milieu gazeux est en contact avec au moins une surface d'un substrat solide, cette surface peut être par exemple la surface du sol.

Le volume peut être un volume ouvert, par exemple un volume extérieur, seulement délimité par une seule surface telle que la surface du sol.

Ou bien le volume peut être un volume clos défini par des parois, tels qu'un sol un plafond et des murs. Le brouillard de gouttelettes remplit alors la totalité du volume clos et les gouttelettes du gel inorganique contenant les espèces contaminantes en suspension capturées se déposent sur au moins l'une ces parois, de préférence sur toutes les parois.

Hormis éventuellement les alliages de métaux légers de type aluminium, dans le cas où l'on met en oeuvre des gels basiques ou acides, il n'existe aucune limitation quant au matériau qui constitue la surface du substrat. En effet, le gel mis en oeuvre selon l'invention permet de traiter sans aucun endommagement, toutes sortes de matériaux même fragiles.

Ce matériau du substrat solide peut donc être choisi parmi par exemple les métaux et alliages comme l'acier inoxydable, l'aluminium, et le plomb ; les polymères tels que les matières plastiques ou caoutchoucs parmi lesquels on peut citer les PVC, PP, PE notamment HDPE, PMMA, PVDF, PC; les verres ; les ciments et les matériaux cimentaires ; les mortiers et bétons ; les plâtres ; les briques ; la pierre naturelle ou artificielle ; les céramiques.

Dans tous les cas, quel que soit le matériau, si selon l'invention on réalise une décontamination de surface, l'efficacité de décontamination par le gel est totale.

La surface du substrat peut être peinte ou non peinte.

Si, selon l'invention, on réalise une décontamination de surface, l'efficacité du traitement avec le gel mise en oeuvre selon l'invention est généralement totale.

Il n'existe également aucune limitation quant à la forme, la géométrie et la taille de la surface du substrat, qui peut être une surface à décontaminer, le procédé selon l'invention permet le traitement de surfaces de grandes tailles, de géométries complexes, présentant par exemple des creux, angles, recoins.

Le procédé selon l'invention, si selon l'invention on réalise une décontamination de surface, assure le traitement efficace non seulement de surfaces horizontales telles que des planchers, mais aussi de surfaces verticales telles que des murs, ou de surfaces inclinées ou en surplomb telles que des plafonds.

Par rapport aux procédés de décontamination, par exemple des procédés de décontamination biologiques existant qui mettent en oeuvre des liquides tels que des solutions, le procédé de décontamination selon l'invention -si selon l'invention on réalise une décontamination de surface- qui met en oeuvre un gel est particulièrement avantageux pour le traitement de matériaux de grande surface, non transportables et implantés à l'extérieur. En effet, le procédé selon l'invention du fait de la mise en oeuvre d'un gel, permet la décontamination *in situ* en évitant l'épandage de solutions chimiques dans l'environnement et la dispersion des espèces contaminantes.

Le temps de reprise de la viscosité suffisamment court des gels mis en oeuvre selon l'invention, permet aux gels pulvérisés d'adhérer à toutes les surfaces, par exemple à des parois.

La quantité de gel déposée sur la surface est généralement de 100 à 2000 g/m², de préférence de 500 à 1500 g/m², de préférence encore de 600 à 1000 g/m².

La quantité de gel déposée par unité de surface et, par voie de conséquence, l'épaisseur du gel déposé influence la vitesse de séchage.

Ainsi, lorsque l'on dépose un film, couche de gel d'une épaisseur de 0,5 mm à 2 mm sur la surface à traiter, le temps de contact efficace entre le gel et les matériaux est alors équivalent à son temps de séchage, période pendant laquelle le principe actif contenu dans le gel va interagir avec la contamination surfacique éventuelle.

En outre, il a été montré de manière surprenante que la quantité de gel déposée lorsqu'elle se situe dans les plages mentionnées plus haut et en particulier lorsqu'elle est supérieure ou égale à 500 g/m² et notamment dans la plage de 500 à 1500 g/m², ce qui correspond à une épaisseur minimale de gel déposée, par exemple supérieure ou égale à 500 µm pour une quantité de gel déposée supérieure ou égale à 500 g/m², permettait après séchage du gel d'obtenir une fracturation du gel sous la forme de paillettes aspirables millimétriques, par exemple d'une taille de 1 à 10 mm, de préférence de 2 à 5 mm.

Une épaisseur de gel déposée de 500 µm peut être facilement atteinte si l'on pulvérise des gouttelettes de gel pendant suffisamment longtemps ou en quantité suffisante.

La quantité de gel déposée et donc l'épaisseur de gel déposée, de préférence supérieure à 500 g/m² soit 500 µm , est le paramètre fondamental qui influence la taille des résidus secs formés après séchage du gel et qui assure ainsi que des résidus secs de taille millimétrique et non des résidus pulvérulents soient formés, de tels résidus étant facilement éliminés par un procédé mécanique et, de préférence, par aspiration.

Cependant, il est également à noter que grâce à l'agent tensio-actif éventuel à faible concentration, généralement de 0,1% à 2% de la masse totale du gel, le séchage du gel est amélioré et conduit à un phénomène de fracturation homogène avec une taille des résidus secs mono dispersée et une aptitude accrue des résidus secs à se détacher du support.

Le gel est ensuite maintenu sur la surface à traiter pendant toute la durée nécessaire à son séchage. Au cours de cette étape de séchage le solvant contenu dans le gel, à savoir généralement l'eau contenue dans le gel s'évapore jusqu'à l'obtention d'un résidu sec et solide.

La durée de séchage dépend de la composition du gel dans les gammes de concentration de ses constituants données plus haut, mais aussi, comme on l'a déjà précisé, de la quantité de gel déposée par unité de surface c'est-à-dire de l'épaisseur de gel déposée.

La durée de séchage dépend aussi des conditions climatiques, à savoir de la température et de l'humidité relative de l'atmosphère dans laquelle se trouve la surface solide.

Le procédé selon l'invention peut être mis en oeuvre dans des conditions climatiques extrêmement larges, à savoir à une température T de 1°C à 50°C et à une humidité relative HR de 20% à 80%.

La durée de séchage du gel selon l'invention est donc généralement de 1 heure à 24 heures à une température T de 1°C à 50°C et à une humidité relative HR de 20% à 80%.

Il est à noter que la formulation du gel mis en oeuvre selon l'invention, notamment lorsque des tensio-actifs tels que les « Pluronics^{®} » assurent généralement un temps de séchage qui est sensiblement équivalent au temps de contact (entre l'agent de décontamination, tel qu'un agent biocide, et les espèces contaminantes surfaciques éventuelles, par exemple les espèces biologiques notamment biotoxiques à éliminer) qui est nécessaire, requis pour inactiver et/ou absorber les espèces contaminantes surfaciques éventuelles polluant le matériau du substrat, et/ou pour réaliser suffisamment les réactions d'érosion de surface du matériau du substrat.

En d'autres termes, la formulation du gel assure un temps de séchage qui n'est autre que le temps d'inactivation des espèces contaminantes surfaciques, par exemple des espèces biologiques, qui est compatible avec la cinétique d'inhibition de la contamination, par exemple de la contamination biologique surfacique

Ou bien la formulation du gel assure un temps de séchage qui n'est autre que le temps nécessaire pour que les réactions d'érosion permettent d'éliminer éventuellement une couche de surface contaminée du matériau.

Dans le cas des espèces contaminantes surfaciques radioactives, la contamination est éliminée par dissolution des dépôts irradiants ou par corrosion des matériaux supports de la contamination. Il y a donc véritablement transfert de la contamination nucléaire vers les paillettes de gels secs.

La surface spécifique de la charge minérale généralement utilisée qui est généralement de 50 m²/g à 300 m²/g, de préférence de 100 m²/g et la capacité d'absorption du gel selon l'invention permettent de piéger la contamination surfacique

Le cas échéant, les espèces contaminantes, par exemple les espèces biologiques contaminantes sont inactivées dans la phase gélifiée. Après séchage du gel, la contamination, par exemple la contamination biologique inactivée est éliminée lors de la récupération du résidu de gel sec décrite plus bas.

A l'issue du séchage du gel, le gel se fracture de manière homogène pour donner des résidus secs solides millimétriques, par exemple d'une taille de 1 à 10 mm, de préférence de 2 à 5 mm non pulvérulents, généralement sous la forme de paillettes solides. Les résidus secs peuvent contenir les espèce(s) contaminante(s) en suspension et les espèces contaminantes surfaciques inactivée(s)).

Les résidus secs, tels que des paillettes, obtenus à l'issue du séchage présentent une faible adhérence à la surface (2) du matériau du substrat. De ce fait, les résidus secs obtenus après séchage du gel peuvent être facilement récupérés par simple brossage et/ou aspiration. Toutefois, les résidus secs peuvent aussi être évacués par jet de gaz, par exemple par jet d'air comprimé.

Ainsi, aucun rinçage par un liquide n'est généralement nécessaire, et le procédé selon l'invention ne génère aucun effluent secondaire.

On peut cependant, bien que cela ne soit pas préféré, et si on le souhaite, éliminer les résidus secs au moyen d'un jet de liquide.

Le procédé selon l'invention réalise donc ainsi tout d'abord une importante économie de réactifs chimiques par rapport à un procédé de décontamination par lavage avec une solution. Ensuite du fait qu'un déchet sous la forme d'un résidu sec directement aspirable est obtenu, une opération de rinçage avec de l'eau ou avec un liquide, généralement nécessaire à l'élimination des traces d'agents chimiques de la pièce, est généralement évitée. Il en résulte bien évidemment une diminution de la quantité d'effluents produits mais aussi une simplification notable en terme de filière de traitement des déchets et d'exutoire.

A l'issue du procédé selon l'invention, on récupère un déchet solide sous forme de paillettes pouvant être conditionnées en l'état, directement conditionnables, il résulte comme on l'a déjà indiqué plus haut, une diminution significative de la quantité d'effluents produits ainsi qu'une simplification notable en terme de filière de traitement du déchet et d'exutoire.

De plus, dans le domaine du nucléaire, le fait de ne pas avoir à retraiter les paillettes avant le conditionnement du déchet constitue un atout considérable ; cela autorise l'utilisation d'agent actifs performants jusqu'ici interdits dans les liquides de décontamination en raison des contraintes d'exploitation des stations de traitement des effluents liquides (« STEL ») .

Le gel pourra donc contenir des agents oxydants puissants tels que le cérium IV qui peut très facilement être régénéré à partir de l'électrolyse du cérium III.

A titre d'exemple, dans le cas courant où l'on dépose 1000 grammes de gel par m² de surface traitée, la masse de déchet sec produite est inférieure à 200 grammes par m².

L'invention va maintenant être décrite en référence aux exemples suivants, donnés à titre illustratif et non limitatif.

### EXEMPLES.

### Exemple 1.

Dans cet exemple, on décrit la formulation d'un gel mis en oeuvre dans le procédé selon l'invention, utilisé notamment dans les exemples 2, 3 et 4.

Ce gel, dit «*Gel-1* » est un gel dont la composition est la suivante :
- 20% en masse d'alumine;
- 80% en masse d'eau déionisée.

L'alumine est l'alumine Aeroxide^{®} Alu C commercialisée par EVONIK INDUSTRIES^{®} qui est une alumine pyrogénée d'une surface spécifique de 100 m²/g (BET).

Ce gel est préparé selon le protocole suivant :
L'eau déionisée est tout d'abord pesée dans un récipient adapté.

L'alumine, dans une proportion de 20% en masse, est ensuite ajoutée progressivement dans l'eau déionisée, sous agitation à l'aide d'un agitateur mécanique, muni d'un agitateur à trois pales, à une vitesse de 200 tours/min, pendant 3 à 5 minutes .

Au fur et à mesure de l'addition d'alumine, la viscosité du milieu agité augmente.

On augmente donc aussi graduellement la vitesse de rotation de l'agitateur au fur et à mesure que la viscosité du milieu agité croît, pour arriver à environ 400 à 600 tours/min lorsque la totalité de l'alumine a été ajoutée, en faisant en sorte qu'il n'y ait pas de projections.

Le gel dit «Gel-1 » ainsi préparé est finalement maintenu sous agitation pendant 5 minutes, et laissé au repos pendant une durée d'au moins une heure avant son utilisation.

### Exemple 2.

Dans cet exemple, on montre que le gel, dit gel *« Gel-1* » possède les propriétés rhéologiques nécessaires à sa mise en oeuvre dans le procédé selon l'invention.

Une étude rhéologique du gel dit « *Gel-1*», préparé dans l'exemple 1 a donc été réalisée et permet de montrer que ce procédé est adapté à :
- une mise en oeuvre par pulvérisation sous la forme de fines gouttelettes.
- une fixation des particules captées sur les parois (sol, plafond et murs) de la pièce à décontaminer.

Pour que le gel puisse être mis en oeuvre par un procédé de pulvérisation, il faut qu'il possède les propriétés d'un fluide rhéofluidifiant, thixotrope.

Pour que le gel permette une fixation des particules captées sur les parois, il faut qu'il possède un temps de reprise de la viscosité très court (inférieur à la seconde), et qu'il possède une contrainte seuil (typiquement supérieure à 10-15 Pa).

Différentes mesures rhéologiques ont été réalisées à l'aide d'un rhéomètre TA Instruments^{®} DHR1 en géométrie « *Vane* » et sont présentées dans cet exemple.

Dans un premier temps, la viscosité du gel a été mesurée en fonction du taux de cisaillement.

Après un pré-cisaillement de 1 minutes à un taux de cisaillement de 20 s⁻¹, puis 1 minute de repos (aucun cisaillement), on applique une rampe continue de taux de cisaillement allant de 0,01 s⁻¹ à 1000 s⁻¹ sur une durée totale de 300 secondes. 10 mesures de la viscosité par décade sont effectuées.

La Figure 2 donne l'évolution de la viscosité (Pa.s) du gel dit « *Gel-1*» en fonction du taux de cisaillement (s⁻¹) pour des taux de cisaillement compris entre 0,01 et 1000 s⁻¹. On observe une chute linéaire (en échelle logarithmique) de la viscosité avec le taux de cisaillement, caractéristique du comportement d'un fluide rhéofluidifiant.

Le gel dit « *Gel-1*» présente donc une viscosité importante à faible cisaillement, à savoir au repos, et une très faible viscosité lorsqu'il est fortement cisaillé, ce qui lui permet d'être pulvérisé.

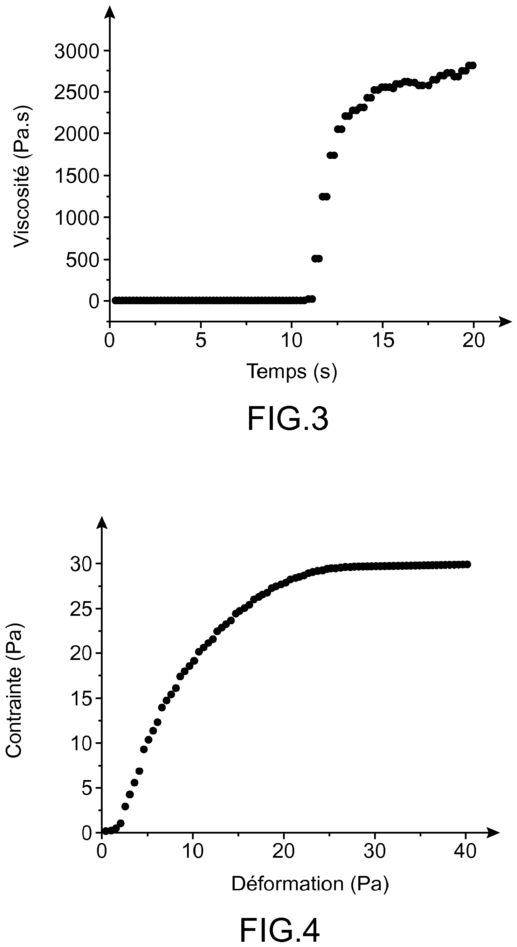

Ensuite, le gel est fortement cisaillé à 1000 s⁻¹, pendant 30 secondes, puis un taux de cisaillement de 0,01 s⁻¹ est directement appliqué, pendant 30 secondes également. La figure 3 présente l'évolution de la viscosité du gel en fonction du temps. On observe que le gel reprend sa viscosité très rapidement suite à un important cisaillement, avec un temps de reprise de la viscosité de l'ordre de la seconde. Cela signifie que les gouttelettes pulvérisées vont reprendre leur viscosité presque instantanément en sortie de buse.

Enfin, un faible taux de cisaillement (0,01 s⁻¹) est appliqué au gel dit « *Gel-1* » de manière constante afin de le déformer en partant du repos et ainsi de déterminer son seuil d'écoulement.

La Figure 4 représente la valeur de contrainte de cisaillement en fonction de la déformation du gel dit « *Gel-1* ». Tout d'abord la contrainte augmente fortement en fonction de la déformation, le matériau est en régime solide (déformation élastique). On observe ensuite un changement de comportement, la contrainte atteint le seuil d'écoulement et le matériau passe en régime liquide (écoulement stationnaire). La contrainte seuil correspond à la contrainte au seuil d'écoulement du « *Gel-1* », soit 30 Pa. Une telle valeur de la contrainte seuil permet au *« Gel-1* » d'adhérer sur une paroi, notamment sur une paroi verticale puis de tenir sur cette paroi pour une épaisseur de quelques millimètres, par exemple pour une épaisseur comprise entre 0 et au moins 2 mm.

Cela permet ainsi la fixation des contaminants préalablement captés dans l'atmosphère.

Pour conclure, cet exemple montre que le « *Gel-1* » possède bien toutes les propriétés rhéologiques nécessaires à sa pulvérisation sous forme de fines gouttelettes en vue de décontaminer une atmosphère contaminée par des contaminants en suspension, puis à la fixation des contaminants captés sur les parois (sol, plafond et murs) de la pièce à décontaminer.

### Exemple 3.

Dans cet exemple, on décrit la pulvérisation du gel dit « *Gel-1* » décrit dans l'exemple 1 sous forme de fines gouttelettes, en d'autres termes on décrit la création d'un brouillard constitué de fines gouttelettes du gel dit « *Gel-1* ».

Le système, dispositif, de pulvérisation de laboratoire utilisé dans cet exemple est analogue à celui qui est représenté sur la Figure 1, et qui a déjà été décrit plus haut.

Ce dispositif est un appareillage unique de laboratoire ne présentant aucune nouveauté technologique mais qui est utilisé différemment qu'à l'accoutumée.

Comme on l'a déjà décrit plus haut, un brouillard de gel constitué de fines gouttelettes, est créé en appliquant au niveau de la buse de pulvérisation du système une pression de fluide et une pression d'air.

La pulvérisation est réalisée dans un volume défini, à savoir sous une sorbonne.

Une fois pulvérisées, les gouttelettes issues de la buse sont récupérées sur un patch de carbone adhésif déposé dans un coin du volume dans lequel a été pulvérisé le brouillard.

Après séchage, on peut ainsi observer la taille unitaire des gouttelettes générées.

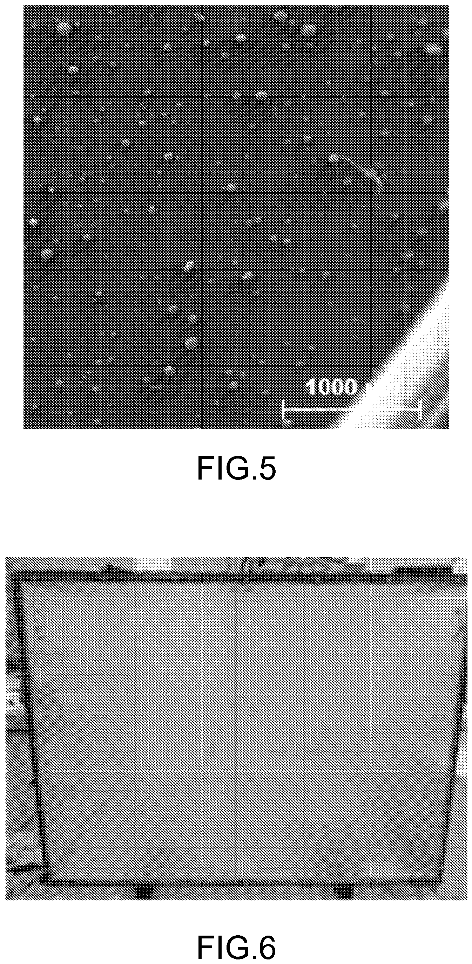

La Figure 5 est une image au Microscope MEB des gouttelettes sèches ainsi générées.

On constate sur la Figure 5, que l'on obtient des gouttelettes sèches dont la taille définie par leur diamètre, est de l'ordre de 40 µm.

Il est à noter que les valeurs des pressions imposées ne semblent avoir que très peu d'influence sur la taille des gouttelettes.

### Exemple 4.

Dans cet exemple, qui illustre le procédé selon l'invention, on remplit un grand volume clos, à savoir un volume clos de 4,5 m³ avec un brouillard du gel dit « Gel-1 » préparé dans l'exemple 1, puis on forme avec ce gel un déchet solide non-pulvérulent sur les parois définissant ce volume. Ce déchet solide peut être récupéré par aspiration (il est aspirable).

Le système de pulvérisation utilisé dans cet exemple pour créer le brouillard est le même que celui utilisé dans l'exemple 3, il est analogue au système représenté sur la Figure 1, et qui a déjà été décrit plus haut.

Il a alors été possible de former un brouillard de gel au sein d'un volume clos défini à l'intérieur des parois d'une boîte parallélépipédique de 4,5 m³ (voir Figure 6).

Ainsi, de la même manière qu'un brouillard composé de gouttelettes d'eau, le brouillard de gel ainsi généré peut, dans un premier temps, capter, puis rabattre, des aérosols de contaminants en suspension dans un grand volume.

Dans un second temps, les gouttelettes emprisonnant les aérosols de contaminants se déposent et s'agglomèrent sur les parois du volume clos grâce aux propriétés rhéologiques du gel, décrites dans l'exemple 2. De cette manière, en fonction du temps et de la vitesse d'aspersion, une couche de gel plus ou moins importante se forme sur les parois du volume clos. Le gel sèche ensuite comme un gel aspirable classique et se fracture en un déchet solide de taille millimétrique emprisonnant les aérosols de contaminants captés et empêchant ainsi leur remise en suspension.

Plus la couche de gel formée par l'agglomération des gouttelettes de gel sera épaisse, plus la taille du déchet solide sera importante.

### REFERENCES

[1] US-A1-2006/0248866.
[2] WO-A3-2004/011041.
[3] EP-A2-1935515.
[4] WO-A1-2010/132949.
[5] FAURE S., FOURNEL B., FUENTES P., LALLOT Y., "Procédé de traitement d'une surface par un gel de traitement, et gel de traitement", FR-A1-2 827 530.
[6] FAURE S., FUENTES P., LALLOT Y., "Gel aspirable pour la décontamination de surfaces et utilisation", FR-A1-2 891 470 & WO-A2-2007/039598.
[7] WO-A1-2014/154817.

## Revendications

1. Procédé de décontamination d'un volume d'un milieu gazeux, tel que de l'air, contaminé par des espèces contaminantes en suspension, ledit volume d'un milieu gazeux étant en contact avec au moins une surface d'un substrat solide, ledit procédé comprenant les étapes successives suivantes :
a) on pulvérise dans ledit volume d'un milieu gazeux de fines gouttelettes, formant ainsi un brouillard, d'un gel inorganique constitué par une solution colloïdale comprenant un agent viscosant inorganique, et un solvant ;
b) les espèces contaminantes en suspension sont capturées, captées par lesdites gouttelettes du gel inorganique ;
c) les gouttelettes du gel inorganique contenant les espèces contaminantes en suspension capturées se déposent sur ladite surface du substrat solide ;
d) on maintient le gel sur la surface du substrat solide au moins pendant une durée suffisante pour que le gel sèche et forme un résidu sec et solide contenant les espèces contaminantes en suspension capturées ;
e) on récupère le résidu sec et solide contenant lesdites espèces contaminantes en suspension capturées, le procédé **caractérisé en ce que**
le volume d'un milieu gazeux est étant un volume clos défini par des parois, telles qu'un sol, un plafond et des murs, formant ladite surface, le brouillard de fines gouttelettes remplissant la totalité du volume clos, et les fines gouttelettes du gel inorganique contenant les espèces contaminantes en suspension capturées se déposant sur au moins l'une des parois, de préférence sur toutes les parois.

2. Procédé selon l'une quelconque des revendications précédentes, dans lequel les fines gouttelettes ont une taille définie, par leur plus grande dimension, telle qu'un diamètre, de 10 à 1000 µm, de préférence de 20 à 200 µm.

3. Procédé selon l'une quelconque des revendications précédentes, dans lequel lesdites espèces contaminantes en suspension se présentent sous la forme de particules solides, de particules liquides, ou sous la forme d'espèces moléculaires.

4. Procédé selon l'une quelconque des revendications précédentes, dans lequel les espèces contaminantes sont choisies parmi les espèces contaminantes chimiques, biologiques, nucléaires ou radioactives.

5. Procédé selon l'une quelconque des revendications précédentes, dans lequel les espèces contaminantes sont des espèces contaminantes radioactives, et/ou chimiquement toxiques, et/ou toxiques du fait de leur forme et/ou de leur taille; de préférence, les espèces contaminantes toxiques du fait de leur forme et/ou de leur taille, sont des espèces contaminantes se présentant sous la forme de particules solides telles que des microparticules, ou des nanoparticules, par exemple sous la forme de fibres telles que des microfibres ou des nanofibres, sous la forme de nanotubes, ou sous la forme de cristaux tels que des nanocristaux.

6. Procédé selon la revendication 4 ou 5, dans lequel les espèces contaminantes sont choisies parmi les métaux et métalloïdes sous forme de métal, de métalloïde, ou ionique, de préférence parmi les métaux dits « métaux lourds », et les métaux et métalloïdes toxiques sous forme de métal, de métalloïde, ou ionique; les composés de ces métaux et métalloïdes tels que les composés organométalliques, les sels de métaux, les oxydes de métaux, les carbures de métaux, etc. ; les céramiques ; le bois ; les céréales ; la farine ; et les verres, par exemple sous la forme de laine de verre ; de préférence, l'espèce contaminante est l'amiante.

7. Procédé selon l'une quelconque des revendications précédentes, dans lequel la solution colloïdale comprend, en outre, un ou plusieurs composant(s) choisi(s) parmi les composants suivants :
- un agent tensioactif;
- un agent actif de décontamination ;
- un agent piégeur (« *getter* ») pour piéger les espèces contaminantes gazeuses, notamment les espèces contaminantes gazeuses toxiques ou explosives, telles que l'hydrogène ;
- un agent extractant des espèces contaminantes ;
- un agent fixateur des espèces contaminantes ;
- un agent colorant.

8. Procédé selon l'une quelconque des revendications précédentes, dans lequel la solution colloïdale, comprend, de préférence est constituée par :
- 1% à 30% en masse, de préférence 1% à 25% en masse, de préférence encore 5% à 25% en masse, mieux 8% à 20% en masse, par rapport à la masse du gel, d'au moins un agent viscosant inorganique ; et un ou plusieurs composant(s) choisi(s) parmi les composants suivants, dans les proportions suivantes :
- 0,1% à 2% en masse, par rapport à la masse du gel, d'au moins un agent tensio-actif ;
- 0,1 à 10 mol/L de gel, de préférence 0,5 à 10 mol/L de gel, de préférence encore 1 à 10 mol/L de gel, et mieux de 3 à 6 mol/L de gel, d'au moins un agent actif de décontamination ;
- 0,1% à 5% en masse, par rapport à la masse du gel, d'au moins un agent piégeur (« getter ») pour piéger les espèces contaminantes gazeuses, notamment les espèces contaminantes gazeuses toxiques ou explosives, telles que l'hydrogène ;
- 0,1% à 5% en masse, par rapport à la masse du gel, d'au moins un agent extractant des espèces contaminantes ;
- 0,1% à 5% en masse, par rapport à la masse du gel, d'au moins un agent fixateur des espèces contaminantes ;
- 0,01% à 10% en masse, de préférence 0,1% à 5% en masse, par rapport à la masse du gel, d'au moins un agent colorant;
- et le reste de solvant.

9. Procédé selon l'une quelconque des revendications 1 à 6, dans lequel la solution colloïdale, comprend, de préférence est constituée par :
- 1% à 30% en masse, de préférence 1% à 25% en masse, de préférence encore 5% à 25% en masse, mieux 8% à 20% en masse, par rapport à la masse du gel, d'au moins un agent viscosant inorganique ;
- et le reste de solvant.

10. Procédé selon l'une quelconque des revendications précédentes, dans lequel l'agent viscosant inorganique est choisi parmi les oxydes de métaux tels que les alumines, les oxydes de métalloïdes tels que les silices, les hydroxydes de métaux, les hydroxydes de métalloïdes, les oxyhydroxydes de métaux, les oxyhydroxydes de métalloïdes, les aluminosilicates, les argiles telles que la smectite, et leurs mélanges; de préférence, l'agent viscosant inorganique est constitué par une ou plusieurs alumine(s) ; de préférence encore, la ou les alumine(s) représente(nt) de 5% à 30% en masse, de préférence de 8% à 17% en masse par rapport à la masse totale du gel.

11. Procédé selon la revendication 10, dans lequel la ou les alumine(s) est (sont) choisie(s) parmi les alumines pyrogénées, de préférence parmi les alumines pyrogénées à granulométrie fine.

12. Procédé selon l'une quelconque des revendications 7 à 11, dans lequel :
- l'agent actif de décontamination est choisi parmi les bases telles que l'hydroxyde de sodium, l'hydroxyde de potassium, et leurs mélanges ; les acides tels que l'acide nitrique, l'acide phosphorique, l'acide chlorhydrique, l'acide sulfurique, les hydrogénooxalates comme l'hydrogénooxalate de sodium, et leurs mélanges ; les agents oxydants tels que les peroxydes, les permanganates, les persulfates, l'ozone, les hypochlorites tels que l'hypochlorite de sodium, les sels de cérium IV, et leurs mélanges; les sels d'ammonium quaternaires tels que les sels d'hexadécylpyridinium (cétylpyridinium), comme le chlorure d'hexadécylpyridinium (cétylpyridinium); les agents réducteurs; et leurs mélanges;
- l'agent tensio-actif est choisi parmi les agents tensio-actifs non ioniques tels que les copolymères blocs, séquencés comme les copolymères séquencés d'oxyde d'éthylène et d'oxyde de propylène, et les acides gras éthoxylés ; et leurs mélanges ;
- l'agent piégeur (« getter ») est choisi parmi les solides de très grande surface spécifique qui contiennent des sites de surfaces actifs, tels que les carbones poreux, par exemple les charbons actifs; les particules de matériaux cages, telles que les particules de zéolithes et de MOFs ; et les particules d'oxydes minéraux pouvant réagir avec les espèces contaminantes à piéger et plus spécifiquement avec l'hydrogène, tels que les oxydes de manganèse (MnO3, Mn2O3, Mn2O4) et les oxydes de métaux nobles, par exemple Ag2O ou RuO2 ;
- l'agent extractant des espèces contaminantes est choisi parmi les adsorbants inorganiques comme les zéolithes, les argiles, les phosphates comme les apatites, les titanates comme les titanates de sodium, et les ferrocyanures et ferricyanures ;
- l'agent fixateur des espèces contaminantes est choisi parmi les résines organiques, telles que les résines polyuréthanes, les résines époxy et les résines acryliques ; et,
- l'agent colorant est choisi parmi les colorants organiques et les pigments minéraux, de préférence micronisés, tels que les oxydes de métal (métaux) et/ou de métalloïde(s), les hydroxydes de métal (métaux) et/ou de métalloïde(s), les oxyhydroxydes de métal (métaux) et/ou de métalloïde(s), les ferrocyanures et ferricyanures de métal (métaux), les aluminates de métal (métaux), et leurs mélanges.

13. Procédé selon l'une quelconque des revendications 7 à 12, dans lequel la surface du substrat solide est contaminée par au moins une espèce contaminante dite espèce contaminante surfacique se trouvant sur ladite surface et éventuellement sous ladite surface dans la profondeur du substrat, le gel contient un agent de décontamination, et lors de l'étape d) on maintient le gel sur la surface au moins pendant une durée suffisante pour que le gel détruise et/ou inactive et/ou absorbe l'espèce contaminante surfacique, et pour que le gel sèche et forme un résidu sec et solide contenant ladite espèce contaminante surfacique et les espèces contaminantes en suspension captées par le gel.

14. Procédé selon l'une quelconque des revendications précédentes, dans lequel le substrat solide est en au moins un matériau solide choisi parmi les métaux et les alliages métalliques comme l'acier inoxydable, les aciers peints, l'aluminium et le plomb ; les polymères tels que les matières plastiques ou les caoutchoucs comme les poly(chlorure de vinyle)s ou PVC, les polypropylènes ou PP, les polyéthylènes ou PE notamment les polyéthylènes haute densité ou HDPE, les poly(méthacrylate de méthyle)s ou PMMA, les poly(fluorure de vinylidène)s ou PVDF, les polycarbonates ou PC ; les verres ; les ciments et les matériaux cimentaires; les mortiers et bétons; les plâtres; les briques; la pierre naturelle ou artificielle ; les céramiques.

15. Procédé selon l'une quelconque des revendications précédentes, dans lequel le résidu sec et solide se présente sous la forme de particules, par exemple de paillettes, d'une taille de 1 à 10 mm, de préférence de 2 à 5 mm.

16. Procédé selon l'une quelconque des revendications précédentes, dans lequel le résidu sec et solide est éliminé de la surface solide par brossage et/ou aspiration.

## Patentansprüche

1. Verfahren zur Dekontamination eines mit kontaminierenden Spezies in einer Suspension kontaminierten Volumens eines gasförmigen Mediums, wie Luft, wobei das Volumen eines gasförmigen Mediums in Kontakt mit mindestens einer Oberfläche eines festen Substrats ist, wobei das Verfahren die folgenden aufeinanderfolgenden Schritte umfasst:
a) Sprühen in das Volumen eines gasförmigen Mediums feiner Tröpfchen, die so einen Nebel bilden, eines anorganischen Gels, das aus einer kolloidalen Lösung besteht, die ein anorganisches Verdickungsmittel und ein Lösungsmittel umfasst;
b) Erfassen der von den Tröpfchen des anorganischen Gels aufgefangenen kontaminierenden Spezies in Suspension;
c) Absetzen an der Oberfläche des festen Substrats der Tröpfchen des anorganischen Gels, welche die aufgefangenen kontaminierenden Spezies in Suspension enthalten;
d) Festhalten des Gels an der Oberfläche des festen Substrats mindestens während einer Dauer, die ausreicht, damit das Gel trocknet, und einen trockenen und festen Rückstand bildet, der die aufgefangenen kontaminierenden Spezies in Suspension enthält;
e) Bergen des trockenen und festen Rückstands, der die aufgefangenen kontaminierenden Spezies in Suspension enthält,
wobei das Verfahren **dadurch gekennzeichnet ist, dass** das Volumen eines gasförmigen Mediums ein geschlossenes Volumen ist, das durch Wände, wie einen Boden, eine Decke und Mauern definiert ist, welche die Oberfläche bilden, wobei der feine Tröpfchennebel die Gesamtheit des geschlossenen Volumens ausfüllt, und die feinen Tröpfchen des anorganischen Gels, welche die aufgefangenen kontaminierenden Spezies in Suspension enthalten, sich an mindestens einer der Wände, vorzugsweise an allen Wänden absetzen.

2. Verfahren nach einem der vorstehenden Ansprüche, wobei die feinen Tröpfchen eine durch ihre größte Abmessung definierte Größe, wie einen Durchmesser von 10 bis 1000 µm, vorzugsweise 20 bis 200 µm aufweisen.

3. Verfahren nach einem der vorstehenden Ansprüche, wobei sich die kontaminierenden Spezies in Suspension in Form von festen Teilchen, flüssigen Teilchen oder in Form von molekularen Spezies darstellen.

4. Verfahren nach einem der vorstehenden Ansprüche, wobei die kontaminierenden Spezies auch chemischen, biologischen, nuklearen oder radioaktiven kontaminierenden Spezies ausgewählt sind.

5. Verfahren nach einem der vorstehenden Ansprüche, wobei die kontaminierenden Spezies radioaktive, und/oder chemisch toxische, und/oder aufgrund ihrer Form und/oder ihrer Größe toxische kontaminierende Spezies sind; wobei die aufgrund ihrer Form und/oder ihrer Größe toxischen kontaminierenden Spezies vorzugsweise kontaminierende Spezies sind, die sich in Form von festen Teilchen, wie Mikroteilchen, oder Nanoteilchen, beispielsweise in Form von Fasern, wie Mikrofasern oder Nanofasern, in Form von Nanoröhrchen, oder in Form von Kristallen, wie Nanokristallen darstellen.

6. Verfahren nach Anspruch 4 oder 5, wobei die kontaminierenden Spezies aus Metallen oder Metalloiden in Form von Metall, Metalloid oder ionisch, vorzugsweise aus den "Schwermetalle" genannten Metallen, und den toxischen Metallen und Metalloiden oder ionisch; den Verbindungen dieser Metalle und Metalloide, wie den organometallischen Verbindungen, den Metallsalzen, den Metalloxiden, den Metallcarbiden, usw.; den Keramiken, Holz; Getreide; Mehl; und Gläsern, beispielsweise in Form von Glaswolle ausgewählt sind; wobei die kontaminierende Spezies vorzugsweise Asbest ist.

7. Verfahren nach einem der vorstehenden Ansprüche, wobei die kolloidale Lösung weiter eine oder mehrere Komponente(n), ausgewählt aus den folgenden Komponenten umfasst:
- einem oberflächenaktiven Mittel;
- einem Dekontaminationswirkstoff;
- einem Fangstoff ("*Getter"*) zum Auffangen gasförmiger kontaminierender Spezies, insbesondere toxischer oder explosiver gasförmiger kontaminierender Spezies, wie Wasserstoff;
- einem Extraktionsmittel für die kontaminierenden Spezies;
- einem Fixiermittel für die kontaminierenden Spezies;
- einem Farbstoff.

8. Verfahren nach einem der vorstehenden Ansprüche, wobei die kolloidale Lösung umfasst, vorzugsweise besteht aus:
- 1 Ma.-% bis 30 Ma.-%, vorzugsweise 1 Ma.-% bis 25 Ma.-%, noch bevorzugter 5 Ma.-% bis 25 Ma.-%, besser 8 Ma.-% bis 20 Ma.-%, in Bezug zur Masse des Gels mindestens einem anorganischen Verdickungsmittel; und einer oder mehreren Komponente(n) ausgewählt aus den folgenden Komponenten, in den folgenden Proportionen:
- 0,1 Ma.-% bis 2 Ma.-%, in Bezug zur Masse des Gels mindestens eines oberflächenaktiven Mittels;
- 0,1 bis 10 Mol/L an Gel, vorzugsweise 0,5 bis 10 Mol/L, noch bevorzugter 1 bis 10 Mol/L, und besser 3 bis 6 Mol/L an Gel, mindestens eines Dekontaminationswirkstoffs;
- 0,1 Ma.-% bis 5 Ma.-%, in Bezug zur Masse des Gels mindestens eines Fangstoffes (*"Getter"*) zum Auffangen gasförmiger kontaminierender Spezies, insbesondere toxischer oder explosiver gasförmiger kontaminierender Spezies, wie Wasserstoff;
- 0,1 Ma.-% bis 5 Ma.-%, in Bezug zur Masse des Gels mindestens eines Extraktionsmittels für die kontaminierenden Spezies;
- 0,1 Ma.-% bis 5 Ma.-%, in Bezug zur Masse des Gels mindestens eines Fixiermittels für die kontaminierenden Spezies;
- 0,01 Ma.-% bis 10 Ma.-%, vorzugsweise 0,1 Ma.-% bis 5 Ma.-%, in Bezug zur Masse des Gels mindestens eines Farbstoffes;
- und der Rest an Lösungsmittel.

9. Verfahren nach einem der Ansprüche 1 bis 6, wobei die kolloidale Lösung umfasst, vorzugsweise besteht aus:
- 1 Ma.-% bis 30 Ma.-%, vorzugsweise 1 Ma.-% bis 25 Ma.-%, noch bevorzugter 5 Ma.-% bis 25 Ma.-%, besser 8 Ma.-% bis 20 Ma.-%, in Bezug zur Masse des Gels mindestens eines anorganischen Verdickungsmittels;
- und der Rest an Lösungsmittel.

10. Verfahren nach einem der vorstehenden Ansprüche, wobei das anorganische Verdickungsmittel aus den Metalloxiden, wie den Aluminiumoxiden, den Metalloidoxiden, wie Kieselsäuren, den Metallhydroxiden, den Metalloidhydroxiden, den Metalloxyhydroxiden, den Metalloidoxyhydroxiden, den Aluminosilicaten, den Lehmen, wie Smektit und deren Gemischen ausgewählt ist; das anorganische Verdickungsmittel vorzugsweise durch ein oder mehrere Aluminiumoxid(e) gebildet wird; das oder die Aluminiumoxid(e) noch bevorzugter 5 Ma.-% bis 30 Ma.-%, vorzugsweise 8 Ma.-% bis 17 Ma.-% in Bezug zur Gesamtmasse des Gels darstellt(en).

11. Verfahren nach Anspruch 10, wobei das oder die Aluminiumoxid(e) aus den pyrogenisierten Aluminiumoxiden, vorzugsweise aus den pyrogenisierten Aluminiumoxiden mit feiner Korngröße ausgewählt ist(sind).

12. Verfahren nach einem der Ansprüche 7 bis 11, wobei:
- der Dekontaminationswirkstoff aus den Basen, wie Natriumhydroxid, Kaliumhydroxid und deren Gemischen ausgewählt wird; den Säuren, wie Salpetersäure, Phosphorsäure, Salzsäure, Schwefelsäure, den Wasserstoffoxalaten, wie Natriumwasserstoffoxalat, und deren Gemischen; Oxidationsmitteln, wie Peroxiden, Permanganaten, Persulfaten, Ozon, Hypochloriten, wie Natriumhypochlorit, den Salzen von Cer IV, und deren Gemischen; quartären Ammoniumsalzen, wie Hexadecylpyridinium (Cetylpyridinium), wie Hexadecylpyridiniumchlorid (Cetylpyridinium); Reduktionsmitteln; und deren Gemischen;
- das oberflächenaktive Mittel aus den nicht ionischen oberflächenaktiven Mitteln wie Blockcopolymeren, den sequenzierten, wie den sequenzierten Ethylenoxid- und Propylenoxid-Copolymeren und den ethoxylierten Fettsäuren und deren Gemischen ausgewählt wird;
- der Fangstoff ("Getter") aus den Feststoffen mit sehr großer spezifischer Fläche ausgewählt ist, die aktive Flächenstellen, wie poröse Kohlenstoffe, beispielsweise Aktivkohle enthalten; Käfigmaterialteilchen, wie Teilchen aus Zeolithen und MOFs; und die Teilchen aus Mineraloxiden, die mit den aufzufangenden kontaminierenden Spezies und genauer mit Wasserstoff reagieren können, wie die Manganoxide (Mn03, Mn203, Mn204) und die Edelmetalloxide, beispielsweise Ag2O oder RuO2;
- das Extraktionsmittel für die kontaminierenden Spezies aus den anorganischen Adsorptionsmitteln, wie den Zeolithen, den Lehmen, den Phosphaten, wie den Apatiten, den Titanaten, wie den Natriumtitanaten und den Ferrocyaniden und Ferricyaniden ausgewählt sind;
- das Fixiermittel für die kontaminierenden Spezies aus den organischen Harzen, wie Polyurethanharzen, den Epoxidharzen und den Acrylharzen ausgewählt ist; und,
- der Farbstoff aus den organischen Farbstoffen und den mineralischen, vorzugsweise mikronisierten Pigmenten, wie Metalloxiden (Metallen) und/oder Metalloid(en), Metall- und/oder Metalloidhydroxiden, Metall- und/oder Metalloidoxyhydroxiden, Metall-Ferrocyaniden und -Ferricyaniden, Metallaluminaten, und deren Gemischen ausgewählt ist.

13. Verfahren nach einem der Ansprüche 7 bis 12, wobei die Oberfläche des festen Substrats durch mindestens eine kontaminierende Spezies, kontaminierende Oberflächenspezies genannt, kontaminiert ist, die sich auf der Oberfläche und eventuell unter der Oberfläche in der Tiefe des Substrats befindet, das Gel ein Dekontaminationsmittel enthält, und im Schritt d) das Gel mindestens für eine Dauer an der Oberfläche gehalten wird, die ausreicht, damit das Gel die kontaminierende Oberflächenspezies zerstört und/oder deaktiviert und/oder absorbiert, und damit das Gel trocknet und einen trockenen und festen Rückstand bildet, der die kontaminierende Oberflächenspezies und die vom Gel aufgefangenen kontaminierenden Spezies in Suspension bildet.

14. Verfahren nach einem der vorstehenden Ansprüche, wobei das feste Substrat aus mindestens einem festen Werkstoff ist, der ausgewählt ist, aus den Metallen und Metalllegierungen, wie nichtrostendem Stahl, lackierten Stählen, Aluminium und Blei; den Polymeren, wie Kunststoff- oder Gummimaterialien, wie Polyvinylchlorid oder PVC, Polypropylen, PP, Polyethylen, PE, insbesondere Polyethylen mit hoher Dichte oder HDPE, Polymethylmethacrylat oder PMMA, Polyvinylidenfluorid oder PVDF, Polycarbonat oder PC, Glas, Zement, und den Zementmaterialien; Mörteln und Beton; Gips; Ziegeln; Naturstein oder Kunststein; Keramik.

15. Verfahren nach einem der vorstehenden Ansprüche, wobei sich der trockene und feste Rückstand in Form von Teilchen, beispielsweise Flitter mit einer Größe von 1 bis 10 mm, vorzugsweise von 2 bis 5 mm darstellt.

16. Verfahren nach einem der vorstehenden Ansprüche, wobei der trockene und feste Rückstand von der festen Oberfläche durch Bürsten und/oder Saugen entfernt wird.

## Claims

1. A method for decontaminating a volume of a gaseous medium, such as air, contaminated by contaminating species in suspension, said volume of a gaseous medium being in contact with at least one surface of a solid substrate, said method comprising the following successive steps:
a) fine droplets of an inorganic gel consisting of a colloidal solution comprising an inorganic viscosifying agent and a solvent are sprayed into said volume of a gaseous medium, thus forming a mist;
b) the contaminating species in suspension are captured, caught by said droplets of the inorganic gel;
c) the droplets of the inorganic gel containing the captured contaminating species in suspension are deposited on said surface of the solid substrate;
d) the gel is maintained on the surface of the solid substrate at least for a period of time sufficient for the gel to dry and form a dry and solid residue containing the captured contaminating species in suspension;
e) the dry and solid residue containing said captured contaminating species in suspension is recovered,
the method **characterized in that** the volume of a gaseous medium is an enclosed volume defined by sidewalls, such as a floor, a ceiling and walls, forming said surface, the mist of fine droplets filling the entire enclosed volume, and the fine droplets of the inorganic gel containing the captured contaminating species in suspension are deposited on at least one of the sidewalls, preferably on all sidewalls.

2. The method according to any one of the preceding claims, wherein the fine droplets have a size defined, by their largest dimension, such as a diameter, of 10 to 1000 µm, preferably of 20 to 200 µm.

3. The method according to any one of the preceding claims, wherein said contaminating species in suspension are in the form of solid particles, liquid particles, or in the form of molecular species.

4. The method according to any one of the preceding claims, wherein the contaminant species are selected from the chemical, biological, nuclear or radioactive contaminant species.

5. The method according to any one of the preceding claims, wherein the contaminant species are radioactive, and/or chemically toxic, and/or toxic contaminant species due to their shape and/or their size; preferably, the toxic contaminant species due to their shape and/or their size, are contaminant species being in the form of solid particles such as microparticles, or nanoparticles, for example in the form of fibers such as microfibers or nanofibers, in the form of nanotubes, or in the form of crystals such as nanocrystals.

6. The method according to claim 4 or 5, wherein the contaminant species are selected from metals and metalloids in metal, metalloid, or ionic form, preferably from metals called "heavy metals", and toxic metals and metalloids in metal, metalloid, or ionic form; the compounds of these metals and metalloids such as organometallic compounds, metal salts, metal oxides, metal carbides, etc.; ceramics; wood; cereals; flour; and glasses, for example in the form of glass wool; preferably, the contaminant species is asbestos.

7. The method according to any one of the preceding claims, wherein the colloidal solution further comprises one or more component(s) selected from the following components:
- a surfactant;
- an active decontamination agent;
- a scavenging agent ("getter") for trapping the gaseous contaminant species, in particular the toxic or explosive gaseous contaminant species, such as hydrogen;
- an agent for extracting contaminant species;
- an agent for fixing contaminant species;
- a coloring agent.

8. The method according to any one of the preceding claims, wherein the colloidal solution comprises, preferably consists of:
- 1% to 30% by weight, preferably 1% to 25% by weight, more preferably 5% to 25% by weight, better still 8% to 20% by weight, relative to the weight of the gel, of at least one inorganic viscosifying agent; and one or more component(s) selected from the following components, in the following proportions:
- 0.1% to 2% by weight, relative to the weight of the gel, of at least one surfactant;
- 0.1 to 10 mol/L of gel, preferably 0.5 to 10 mol/L of gel, more preferably 1 to 10 mol/L of gel, and better still 3 to 6 mol/L of gel, of at least one active decontamination agent,
- 0.1% to 5% by mass, relative to the mass of the gel, of at least one scavenging agent ("getter") for trapping the gaseous contaminant species, in particular the toxic or explosive gaseous contaminant species, such as hydrogen
- 0.1% to 5% by mass, relative to the mass of the gel, of at least one agent for extracting gaseous contaminant species;
- 0.1% to 5% by mass, relative to the mass of the gel, of at least one agent for fixing contaminant species;
- 0.01% to 10% by mass, preferably 0.1% to 5% by mass, relative to the mass of the gel, of at least one coloring agent;
- and the remainder of solvent.

9. The method according to any one of claims 1 to 6, wherein the colloidal solution comprises, preferably consists of:
- 1% to 30% by mass, preferably 1% to 25% by mass, more preferably 5% to 25% by mass, better still 8% to 20% by mass, relative to the mass of the gel, of at least one inorganic viscosifying agent;
- and the remainder of solvent.

10. The method according to any one of the preceding claims, wherein the inorganic viscosifying agent is selected from metal oxides such as aluminas, metalloid oxides such as silicas, metal hydroxides, metalloid hydroxides, metal oxyhydroxides, metalloid oxyhydroxides, aluminosilicates, clays such as smectite, and mixtures thereof, preferably, the inorganic viscosifying agent consists of one or more alumina(s); more preferably, the alumina(s) represent(s) from 5% to 30% by mass, preferably from 8% to 17% by mass relative to the total mass of the gel.

11. The method according to claim 10, wherein the alumina(s) is (are) selected from pyrogenic aluminas, preferably from fine-grained pyrogenic aluminas.

12. The method according to any one of claims 7 to 11, wherein:
- the active decontamination agent is selected from bases such as sodium hydroxide, potassium hydroxide, and mixtures thereof; acids such as nitric acid, phosphoric acid, hydrochloric acid, sulfuric acid, hydrogenoxalates such as sodium hydrogenoxalate, and mixtures thereof; oxidizing agents such as peroxides, permanganates, persulfates, ozone, hypochlorites such as sodium hypochlorite, cerium IV salts, and mixtures thereof; quaternary ammonium salts such as hexadecylpyridinium (cetylpyridinium) salts, such as hexadecylpyridinium (cetylpyridinium) chloride; reducing agents; and mixtures thereof;
- the surfactant is selected from nonionic surfactants such as sequenced block copolymers, such as block copolymers of ethylene oxide and propylene oxide, and ethoxylated fatty acids; and mixtures thereof,
- the scavenging agent ("getter") is selected from solids with a very large specific surface area which contain active surface sites, such as porous carbons, for example activated carbons; particles of cage materials, such as particles of zeolites and MOFs; and the particles of mineral oxides capable of reacting with the contaminant species to be scavenged and more specifically with hydrogen, such as manganese oxides (MnO3, Mn2O3, Mn2O4) and noble metal oxides, for example Ag2O or RuO2;
- the extracting agent for the contaminant species is selected from inorganic adsorbents such as zeolites, clays, phosphates such as apatites, titanates such as sodium titanates, and ferrocyanides and ferricyanides;
- the fixing agent for the contaminant species is selected from organic resins, such as polyurethane resins, epoxy resins and acrylic resins; and,
- the coloring agent is selected from organic dyes and mineral pigments, preferably micronized, such as metal and/or metalloid oxides, metal and/or metalloid hydroxides, metal and/or metalloid oxyhydroxides, metal (metals) ferrocyanides and ferricyanides, metal aluminates, and mixtures thereof.

13. The method according to any one of claims 7 to 12, wherein the surface of the solid substrate is contaminated by at least one contaminant species called surface contaminant species located on said surface and optionally under said surface in the depth of the substrate, the gel contains a decontamination agent, and during step d) the gel is maintained on the surface at least for a period of time sufficient for the gel to destroy and/or inactivate and/or absorb the surface contaminant species, and for the gel to dry and form a dry and solid residue containing said surface contaminant species and the contaminating species in suspension caught by the gel.

14. The method according to any one of the preceding claims, wherein the solid substrate is made of at least one solid material selected from metals and metal alloys such as stainless steel, painted steels, aluminum and lead; polymers such as plastics or rubbers such as poly(vinyl chloride)s or PVC, polypropylenes or PP, polyethylenes or PE in particular high density polyethylenes or HDPE, poly(methyl methacrylate)s or PMMA, poly(vinylidene fluoride)s or PVDF, polycarbonates or PC; glasses; cements and cementitious materials; mortars and concretes; plasters; bricks; natural or artificial stone; ceramics.

15. The method according to any one of the preceding claims, wherein the dry and solid residue is in the form of particles, for example flakes, with a size of 1 to 10 mm, preferably 2 to 5 mm.

16. The method according to any one of the preceding claims, wherein the dry and solid residue is removed from the solid surface by brushing and/or vacuuming.
